# EUROPÄISCHE PATENTSCHRIFT

(11) **EP 2 687 026 B1**
(45) Veröffentlichungstag und Bekanntmachung des Hinweises auf die Patenterteilung: **14.11.2018**
(21) Anmeldenummer: 12709103.1
(22) Anmeldetag: 16.03.2012
(51) Int. Cl.: H04W 4/50, H04N 21/41, H04N 21/43

(54) **VERFAHREN UND SYSTEM ZUR KOPPLUNG EINES MOBILEN GERÄTES MIT EINEM AUSGABEGERÄT**
METHOD AND SYSTEM FOR COUPLING A MOBILE DEVICE TO AN OUTPUT DEVICE
PROCÉDÉ ET SYSTÈME DE COUPLAGE D'UN APPAREIL MOBILE AVEC UN APPAREIL DE SORTIE

(30) Priorität: 18.03.2011 AT 3862011
(43) Veröffentlichungstag der Anmeldung: 22.01.2014
(73) Patentinhaber: Siemens Convergence Creators GmbH, 1210 Wien (AT)
(72) Erfinder: JENZOWSKY, Stefan, A-1210 Wien (AT); PLACHO, Markus, A-2320 Schwechat (AT)
(74) Vertreter: Novagraaf Technologies
(86) Internationale Anmeldenummer: PCT/EP2012/054651
(87) Internationale Veröffentlichungsnummer: WO 2012/126823

(56) Entgegenhaltungen:
- EP-A2- 2 293 562
- US-A1- 2008 320 543
- US-A1- 2010 095 332
- US-A1- 2010 211 979

## Beschreibung

### Technisches Gebiet

Die vorliegende Erfindung betrifft allgemein das Gebiet der Kommunikations- und Multimediatechnik sowie der Übertragung und Ausgabe von Dateninhalten, insbesondere so genannter Over-the-Top-Inhalte. Im Speziellen bezieht sich die vorliegende Erfindung auf ein Verfahren sowie ein System zur Kopplung zumindest eines mobilen Gerätes mit zumindest einem Ausgabegeräte, insbesondere einer Bildschirmeinheit. Dabei wird mit dem mobilen Gerät eine Auswahl und/oder Ausgabe von Dateninhalten gesteuert, wobei diese Dateninhalte über ein zelluläres Kommunikationsnetz zur Verfügung gestellt werden.

### Stand der Technik

In den letzten Jahren hat sich die Kapazität von mobilen Geräten, insbesondere von so genannten Smartphones und Tablet-PCs, stark gewandelt. Ein so genanntes Smartphone ist üblicherweise ein Mobiltelefon, von welchem meist über zusätzliche Programme - so genannte Apps - mehr Computerfunktionalität und -konvektivität als von einem herkömmlichen Mobiltelefon zur Verfügung gestellt wird. Ein so genannter Tablet-PC ist ein tragbarer Personal-Computer (PC) - ähnlich einem Laptop, welcher ohne Tastatur benutzt werden kann. Eine Bedienung wird dabei entweder per Eingabestift oder auch per Finger (z.B. mittels so genannter Multi-Touch-Gesten) direkt auf einen meist kapazitiv berührungsempfindlichen Bildschirm durchgeführt. Derartige mobilen Geräte wie z.B. Smartphones, Tablet-PC, etc. können leicht mitgenommen und transportiert werden und können den jeweiligen Nutzer auch von unterwegs oder an einem beliebigen Ort eine Anbindung z.B. an das Internet über z.B. ein Mobilfunknetz, Wireless-LAN, etc. ermöglichen.

Gleichzeitig wurden auch die technischen Möglichkeiten und/oder Eigenschaften von Fernsehgeräten bzw. TV-Sets erweitert und verbessert. Fernsehgeräte weisen heutzutage mittels so genannter externer Set-Top-Boxen oder über integrierte Einheiten die Möglichkeit auf, das Internet über das Fernsehgerät zu nutzen bzw. auch Fernsehprogramme direkt via Internet als so genanntes IP-TV zu konsumieren. Diese Möglichkeit reicht von einer einfachen Anbindung an das Internet bis zu Technologien wie beispielsweise in das Fernsehgerät integrierte Browser zur Darstellung von Dateninhalten aus dem Internet oder mit dem TV-Set verbindbare Anwendungen, über welche kostenpflichtig fernsehspezifische Applikationen erworben und geladen werden können. Parallel wird auch das so genannte Video-on-Demand von derartigen Weiterentwicklungen beeinflusst. Wurde früher ein Zugriff auf Dateninhalte (z.B. multimediale Daten, insbesondere Audio- und/oder Videodaten) sowie deren Bereitstellung am Fernsehgerät bzw. TV-Set beispielsweise auf Basis von standardisierten Verfahren zur Übertragung von digitalen Inhalten wie z.B. Digital Video Broadcasting oder DVB durchgeführt, so erfolgt mittlerweile eine Übertragung der Dateninhalte zum Fernsehgerät bzw. zum TV-Set mittels so genanntem Internet-Protokoll-Television oder IP-TV. Beim IP-TV wird als Übertragungsweg für Filme, Fernsehprogramme, aber für Video-on-Demand üblicherweise das Internet genutzt.

Durch diese Entwicklungen wird auch so genannter Over-the-Top (OTT) Content ermöglicht. Darunter wird üblicherweise eine Online-Übermittlung von Dateninhalten (z.B. multimediale Daten, Videoinhalten, Audioinhalten, etc.) verstanden, wobei kein Internet-Service-Provider in eine Kontrolle und/oder Verbreitung der Dateninhalte involviert ist. Die Dateninhalten werden meist von großen Medienunternehmen zur Verfügung gestellt und können vom Benutzer von einer einfachen Website oder von einer auf dem Internet-Protokoll (IP) basierenden Umgebung geladen werden, wodurch eine so genannte OTT-Datenauslieferung aus der so genannten IP-Cloud - d.h. aus einer abstrahierten IP-basierten Infrastruktur durchgeführt wird.

Benutzern ist es damit möglich über verschiedene Ausgabegeräte (z.B. Smartphones. Tablet-PCs, Fernsehgerät, etc.) auf z.B. OTT-Dateninhalten oder Video-on-Demand-Umgebungen zu zugreifen. Dabei ist es heutzutage auch wichtig, geladene Dateninhalten flexibel - d.h. je nach Bedarf auf einem entsprechenden Ausgabegerät - angezeigt und abgespielt zu können. Einerseits soll die Möglichkeit bestehen, Dateninhalte z.B. auf einer Anzeigeeinheit eines mobilen Geräts wie z.B. einem Smartphone, etc. abspielen oder anzeigen zu können. Andererseits sollen die Dateninhalte - wenn verfügbar -auf einem großflächigen Ausgabegeräte (z.B. TV-Bildschirm) angezeigt werden, wenn ein entsprechendes Ausgabegerät verfügbar ist bzw. sich der Benutzer beispielsweise zu Hause aufhält. Das bedeutet, Benutzern von OTT-Dateninhalten ist es wichtig, gegebenenfalls während des Ansehens/Abspielens von Dateninhalten die Anzeige von Dateninhalten zwischen Ausgabegeräten hin- und herzutransferieren.

In einer modernen Fernsehumgebung stellt aber auch eine Auswahl von Inhalten eine relativ komplexe Herausforderung für den Benutzer dar. Nicht nur, dass Fernseh-Nutzer zahlreiche - meist einige 100 - Kanäle zur Auswahl zur Verfügung stehen, sondern es werden dem Benutzer von so genannten Video-on-Demand-Umgebungen noch zusätzlich zahlreiche Dateninhalte wie z.B. multimediale Daten, Audio- und/oder Videoinhalte zur Auswahl angeboten. Dabei ist es für den Benutzer in einer derartigen OTT-Fernsehumgebung, dass gewünschte Kanäle und/oder Dateninhalte rasch und einfach durchstöbert und selektiert werden können. Dabei wird eine rasche und einfache Auswahl der Dateninhalte stark von einer Präsentation der Dateninhalten und/oder Kanäle auf einem Ausgabegeräte - insbesondere einer Bildschirmeinheit - sowie einer entsprechend sinnvollen Ausnutzung der Ausgabegerätfläche bzw. Bildschirmfläche beeinflusst.

So ist es beispielweise für einen Benutzer angenehmer und einfacher auszuwählen, wenn von ihm während einer vorgegebenen Auswahlperiode mehr auszuwählende Dateninhalte und Fernsehkanäle bzw. Angebote von auswählbaren Dateninhalten und/oder Fernsehkanäle überblickt und verarbeitet werden können. Dabei ist es entscheidend, dass eine entsprechende Anzahl von Angeboten auszuwählender Dateninhalte und/oder Fernsehkanäle entsprechend übersichtlich auf dem Ausgabegeräte angezeigt werden und dem Benutzer eine entsprechend Navigationsmöglichkeit durch die Präsentation der Dateninhalte und/oder Kanäle angeboten wird.

Für eine Navigation durch die angebotenen Dateninhalte und/oder Fernsehkanäle und dann für eine Auswahl des entsprechend gewünschten Dateninhalts bzw. Fernkanal sind beispielsweise mehrere Vorgehensweisen - je nach genutztem Ausgabegerät - möglich. Wird z.B. ein Fernsehgerät oder ein TV-Set als Ausgabegerät genutzt, so wird üblicherweise einen Fernbedienung, welche beispielsweise über Infrarot fix mit dem Ausgabegerät gekoppelt ist, für eine Navigation durch Fernkanäle und/oder Dateninhalte bzw. für die Auswahl der gewünschten Kanäle bzw. Dateninhalte verwendet. Alternativ besteht auch die Möglichkeit eine Fernbedienung über z.B. Wireless-LAN zu koppeln oder als Fernbedienung ein so genanntes Smartphone mit Hilfe des so genannten VooMote-Konzepts, welche eine spezielle Anwendung für Smartphones darstellt und durch welche ein Smartphone in eine smarte Universalfernbedienung verwandelt werden kann, für ein Fernsehgerät als Ausgabegerät einzusetzen. Dabei erfolgt ein Durchstöbern der auf dem Ausgabegerät angebotenen Dateninhalte und/oder Fernsehkanäle üblicherweise mit Hilfe der Tastatur der jeweiligen Fernbedienung. Über die Tastatur wird dabei beispielsweise auf einer Präsentationsoberfläche der OTT-Dateninhalte bzw. Fernsehkanäle, welche auf dem Ausgabegerät angezeigt wird, ein so genannter Kursor angesteuert, um durch die präsentierten Inhalte zu browsen bzw. gewünschte Dateninhalte, etc. auszuwählen. Wird beispielsweise ein Personal Computer als Ausgabegerät für die Präsentation der OTT-Dateninhalte eingesetzt, so kann eine Navigation und/oder eine Auswahl über eine Tastatur und/oder über eine so genannte Computermaus durchgeführt werden. Über die Bewegungen der Computermaus wird dann z.B. ein Kursor durch die Inhalte bewegt und eine Auswahl durchgeführt. Tablet-PC weisen üblicherweise einen meist kapazitiv berührungsempfindlichen Bildschirm - einen so genannten Touchscreen - auf. Werden daher Tablet-PCs für die Präsentation und Auswahl von Dateninhalten verwendet, so erfolgt das Browsen durch die präsentierten Dateninhalte sowie die Auswahl z.B. mittels Eingabestift und/oder der Finger bzw. mittels so genannter Multi-Touch-Gesten.

Bei den Ausgabegeräten ist allerdings nicht nur die unterschiedliche Ansteuerung von Navigation durch Dateninhalte und/oder Fernsehkanäle zu berücksichtigen, sondern auch die unterschiedliche zur Verfügung stehende Bildschirmfläche. Die Bildschirmfläche kann von relativ groß (z.B. Fernsehbildschirm) bis zu relativ klein (z.B. Display eines Smartphones) variieren. Damit wird dem Benutzer nicht nur eine unterschiedliche Ansteuerungsmöglichkeit geboten, sondern auch eine von der jeweilig verfügbaren Bildschirmfläche abhängige Anzeige der auswählbaren Dateninhalte. Das bedeutet, dass der Benutzer je nach Ausgabegerät an eine vorgegebene Art der Navigation bzw. an ein bestimmtes mobiles Gerät (z.B. Fernbedienung, etc.) zur Ansteuerung des Browsens durch das Angebot an Dateninhalten gebunden ist und zusätzlich die Präsentation der Dateninhalte vom jeweiligen Ausgabegerät abhängt.

Um einen Auswahl von Dateninhalten für den Benutzer einfacher und/oder übersichtlicher zu gestalten, besteht die Möglichkeit nutzerspezifisches Verhalten bei der Präsentation der Dateninhalten bzw. Fernsehkanäle zu berücksichtigen. Dabei können beispielsweise benutzerspezifische Präferenzen, Fernsehverhalten, Nutzungsmuster, etc. genutzt werden. Aber trotz einer nutzerspezifischen Einschränkung der angebotenen Dateninhalte sind ein individuelles Erlebnis beim Browsen bzw. Durchstöbern der Dateninhalte und eine entsprechende einfache und intuitive Bedienbarkeit bei der Auswahl von Dateninhalten, insbesondere im Bereich von OTT-Angeboten entscheidend.

Daraus ergeben sich beim Abrufen und Anzeigen von so genannten OTT-Angeboten bzw. OTT-Dateninhalten mehrere Probleme:
- Werden Dateninhalte als OTT-Angebote zur Verfügung gestellt, so sind diese über das Internet - in der so genannten IP-Cloud verfügbar. Das heißt, die Dateninhalte (z.B. Audioinhalte, Videoinhalte, etc.) können auf beliebigen Ausgabegeräten mit unterschiedlichen Anzeigeflächen und Eigenschaften an einem beliebigen Ort konsumiert werden, ohne dass dies beim Anbieten der Dateninhalte bekannt ist. Dadurch ergibt sich allerdings eine unterschiedliche Präsentation der Dateninhalte und für den Benutzer kann ein Erlernen einer neuen Navigationsweise durch die Dateninhalte notwendig sein.
- Es kann für spezielle Dateninhalte wie z.B. Videoinhalte sinnvoll sein, dass vom Benutzer zwischen unterschiedlichen Ausgabegeräten hin- und hergeschaltet werden kann. Dazu ist allerdings einen Kopplung zwischen verschiedenen Ausgabegeräten und/oder mobilen Geräten, welche zur Auswahl von Dateninhalten genutzt werden können, notwendig. Üblicherweise besteht aber keine direkte Verbindung zwischen den verschiedenen von einem Benutzer genutzten mobilen Geräten (z.B. Smartphone, Tablet-PC, etc.) und Ausgabegeräten, insbesondere Bildschirmeinheiten). So weisen beispielsweise Smartphones oder Tablet-PC keine Infrarot-Verbindung auf, um sie z.B. mit einem Fernsehgerät zu verbinden.
- Für Benutzer ist es nicht selten wichtig, dass eine Verbindung der von ihm genutzten Ausgabegeräte und mobilen Geräte automatisch und ohne großen Aufwand (z.B. Installation, etc.) erfolgt. Insbesondere wenn eine örtliche Nähe zwischen diesen besteht, sollte eine automatische und sichere Kopplung bzw. Trennung der Kopplung auf einfache Weise möglich sein.
- Zusätzlich sollte für den Benutzer ein einfaches Interagieren (z.B. Browsen durch Dateninhalte, Auswählen von Dateninhalten und/oder Fernsehkanälen, etc.) möglich sein sowie beispielsweise eine parallel Nutzung von OTT-Angeboten auf verschiedenen Ausgabegeräten.
- Weiterhin ist bei der Anzeige von OTT-Dateninhalten wichtig, dass durch nicht gewünschte Dateninhalten und/oder bereits benutzte Dateninhalte eine Anzeige von gewählten Dateninhalten nicht gestört wird. Es soll auch verhindert werden, dass Benutzer unabsichtlich nicht geeignete Inhalte präsentiert werden (z.B. nichtjugendfrei Inhalte, etc.)
- Zusätzlich ist es auch wichtig, dass eine Präsentation der OTT-Dateninhalte bzw. die Auswahl der Dateninhalte entsprechend den Eigenschaften des gewählten Ausgabegerätes (z.B. verfügbare Bildschirmfläche, etc.) angepasst werden.

Derzeit sind beispielsweise mobile Geräte zur Steuerung von Auswahl und Ausgabe von Dateninhalten (z.B. Fernbedienung) fix mit dem Ausgabegerät (z.B. über Infrarot, Wireless-LAN, etc.) gekoppelt. Damit kann der Benutzer nicht flexibel entscheiden, welches mobile Gerät zur Steuerung von Auswahl und Ausgabe von Dateninhalten in Kombination mit welchem Ausgabegeräte eingesetzt werden soll. Auch ein Umschalten bzw. Umlenken der Ausgabe der gewählten Dateninhalte auf ein geeigneteres Ausgabegerät (z.B. Auswahl am Smartphone und Anzeige auf einem Fernsehgerät, etc.) ist damit nicht möglich.

Alternativ gibt es auch Unterhaltungssysteme, welche auf Vorgaben der Digital Living Network Alliance (DLNA) basieren. Die DLNA ist eine internationale Vereinigung von Herstellern von Computern, Unterhaltungselektronik und Mobiltelefonen mit dem Ziel, die Interoperabilität von informationstechnischen Geräten unterschiedlicher Hersteller im Bereich des privaten Gebrauchs sicherzustellen. Dabei können allerdings z.B. immer wieder Probleme bei Präsentation und Auswahl auftreten, wenn beispielsweise bestimmte Datenformate, etc. von einzelnen Geräten des Systems nicht unterstützt werden.

Eine weitere Möglichkeit, dem Benutzer eine Kopplung eines Ausgabegerätes mit einem mobilen Gerät als Steuereinheit anzubieten, ist beispielsweise eine indirekt Kopplung dieser Geräte über eine spezielle Hintergrundfunktion. Diese Vorgehensweise weist allerdings den Nachteil auf, dass sowohl vom Ausgabegerät als auch vom verwendeten mobilen Gerät dieselbe spezielle Hintergrundfunktion verwendet werden muss. Das bedeutet, dass vom Benutzer Geräte verwendet werden müssen, welche vom selben Hersteller stammen. Dadurch wird die Flexibilität für den Benutzer sehr reduziert. Denn es können nur mehr mobile Geräte mit Ausgabegeräten eines Herstellers gekoppelt werden und der Benutzer ist gezwungen, jene Geräte, welche er koppeln möchte, von einem Hersteller zu beziehen. Eine Kopplung beliebiger Ausgabegeräte mit beliebigen mobilen Geräten von verschiedenen Herstellern ist damit nicht möglich. Weiterhin kann eine derartige indirekte Kopplung über einen spezielle Hintergrundfunktion nicht bei beliebigen OTT-Dateninhaltangeboten integriert werden, wodurch die Auswahlmöglichkeiten eines Benutzer erheblich eingeschränkt wird. In Dokument EP2293562 A2 werden Inhalte im Falle eines Ereignisses basierend auf der Änderung des Abstands zwischen zwei Geräten automatisch wiedergegeben.

Das Dokument US2008320543 A1 beinhaltet ein Home Gateway, das Wiedergabe von Medieninhalten an ausgewählte Geräte unterstützt.

### Darstellung der Erfindung

Der Erfindung liegt daher die Aufgabe zugrunde, ein Verfahren sowie ein System anzugeben, durch welche auf einfache und flexible Weise beliebige mobile Geräte in Kombination mit zumindest einem beliebig gewählten Ausgabegerät zur Steuerung, Auswahl und Anzeige von Dateninhalten, welche über ein zelluläres Kommunikationsnetz zur Verfügung gestellt werden, genutzt werden können, wobei die mobilen Geräte wie die Ausgabegerät von einem beliebigen Hersteller stammen können.
Diese Aufgabe wird durch ein Verfahren sowie ein System der eingangs genannten Art mit den Merkmalen gemäß den unabhängigen Patentansprüchen gelöst. Vorteilhafte Ausführungsformen der vorliegenden Erfindung sind in den abhängigen Ansprüchen beschrieben.

Erfindungsgemäß erfolgt die Lösung der Aufgabe mit einem Verfahren der eingangs erwähnten Art, bei welchem vom zumindest einen mobilen Gerät über das zelluläre Kommunikationsnetz eine Kopplungskomponente angestoßen wird. Dann wird auf Basis eines gespeicherten, benutzerspezifischen Umgebungsmusters von der Koppelungskomponente (CDE) das zumindest eine zu koppelnde Ausgabegerät bestimmt und eine Kopplung mit dem zumindest einen mobilen Gerät dynamisch durchgeführt.

Der Hauptaspekt der erfindungsgemäß vorgeschlagenen Lösung besteht darin, dass verschiedene mobilen Geräte (z.B. Smartphone, Tablet-PC, etc.) eines Benutzer dynamisch, flexible und automatisch mit Hilfe einer Kopplungskomponente über ein zelluläres Kommunikationsnetz (z.B. Internet) mit zumindest einem Ausgabegerät des Benutzers (z.B. Fernsehgerät, TV-Set) gekoppelt werden können. Von der Kopplungskomponente wird auf Basis eines gespeicherten, benutzerspezifischen Umgebungsmuster erkannt, welches Ausgabegerät des Benutzers wann - z.B. wenn sich ein mobiles Gerät in der Nähe des Ausgabegeräts befindet - gekoppelt werden kann bzw. wieder entkoppelt werden muss. Dabei müssen verwendete mobile Geräte wie Ausgabegeräte nicht von demselben Hersteller stammten. Vom Benutzer können idealer Weise Geräte beliebiger Hersteller für die Kopplung verwendet werden.

Durch die Kopplung kann das zumindest eine mobile Geräte vom Benutzer zur Steuerung der Auswahl und/oder Ausgabe der Dateninhalte auf einfache Weise genutzt und wie eine Fernbedienung für das Ausgabegerät eingesetzt werden. Zusätzlich besteht die Möglichkeit entweder zwischen unterschiedlichen Ausgabegeräten (z.B. Fernseher, Display des Smartphones oder Tablet-PCs) je nach Bedarf auf einfache Weise (z.B. mittels Multi-Touch-Bewegungen, etc.) hin- und herzuschalten oder die beiden Ausgabegeräte beispielsweise parallel zu nutzen. So kann beispielsweise auf einem Display des mobilen Geräts eine Programmübersicht, auszuwählende Dateninhalte, etc. angezeigt werden, während am Ausgabegerät z.B. ein bereits ausgewählter Dateninhalt angezeigt wird. Das erfindungsgemäße Verfahren ermöglicht auch als weitere Anwendung eine Kombination von Fernseh-Werbung mit so genannter Direct-Response-Werbung. Dabei werden beispielsweise dem Benutzer zusätzlich zu Werbeinhalten am Ausgabegerät (z.B. TV-Bildschirm, Fernsehgerät, etc.) auf einer Ausgabeeinheit des gekoppelten mobilen Geräts (z.B. Display von Smartphone, Display des Tablet-PCs, etc.) zusätzliche, gegebenenfalls interaktive Dateninhalten (z.B. Auto-Konfigurator, Abrufmöglichkeit für Coupons, etc.) angeboten, ohne dass die Ausgabe am Ausgabegerät gestört wird.

Zusätzlich bietet das erfindungsgemäße Verfahren die Möglichkeit eine verfügbare Anzeigefläche - d.h. beispielsweise eine Bildschirm eines Fernsehgeräts, ein Display eines Smartphones oder eines Tablet-PCs optimal zu nutzen. Auch die präsentierten auswählbaren und/oder ausgegebenen Dateninhalte können optimal an das jeweilige Ausgabegerät angepasst werden, da von der Kopplungskomponente nicht nur Bildschirmflächen von Ausgabegeräten, sondern auch Übertragungskapazitäten für Dateninhalte wie z.B. Bandbreite, Pixelgröße, High Definition-Abspielkapazitäten, etc. entsprechend ausgewertet werden können. Von einem Benutzer können damit rasch und auf einfache Weise - ohne eine neue Navigation erlernen zu müssen - über das zelluläre Kommunikationsnetz zur Verfügung gestellte Dateninhalte, insbesondere Over-the-Top-Inhalte, gesichtet, ausgewählt und auf einem beliebigen, verfügbaren Ausgabegerät in optimaler Weise angezeigt werden.

Dabei ist es vorteilhaft, wenn für ein Anstoßen der Kopplungskomponente und einer Bestimmung des zumindest einen zu koppelnden Ausgabegerätes vom zumindest einen mobilen Geräte ein aktuelles Umgebungsmuster ermittelt wird, und dann auf Basis von Parametern des aktuellen Umgebungsmuster von der Nähebestimmungseinheit der Kopplungskomponente eine Nähe zwischen dem zumindest einem mobilen Gerät und dem zumindest einen Ausgabegerät abgeschätzt wird. Auf diese einfache Weise wird sichergestellt, dass nur mobile Geräte und Ausgabegeräte miteinander gekoppelt werden, welche sich in einer gewissen örtlichen Nähe zueinander befinden. Es wird damit verhindert, dass von einem Benutzer unabsichtlich mit einem mobilen Geräte ein anderes Ausgabegerät angesteuert wird, welche sich nicht in einer bestimmten örtlichen Nähe (z.B. im selben Raum, etc.) zum mobilen Gerät befindet.

Zweckmäßiger Weise werden für eine Abschätzung der Nähe zwischen den Geräten auf Basis von Parametern von der Nähebestimmungseinheit Methoden der so genannten Fuzzy-Logik und/oder Modelle der Wahrscheinlichkeitsrechnung eingesetzt. Da eine rasche Bestimmung für eine zeiteffiziente Kopplung wichtig ist, werden von der Nähebestimmungseinheit nur einige Parameter für diese Bestimmung herangezogen und um zu einem raschen Ergebnis zu gelangen, Abschätzungen durchgeführt. Mit Hilfe von Fuzzy-Logik-Methoden oder Modellen der Wahrscheinlichkeitsrechnung werden auf rasche Weise gute Aussagen über eine örtliche Nähe zwischen einem oder mehreren mobilen Geräten sowie zumindest einem Ausgabegerät erzielt werden, welche beispielsweise zu einem Kopplungsszenario gehören. Von der Kopplungskomponente wird über die Nähebestimmungseinheit damit rasch und effizient festgestellt, ob das mobile Gerät nah (z.B. im selben Raum) bei einem zu koppelnden Ausgabegerät ist. Eine Kopplung kann damit ohne lange Wartezeiten für den Benutzer durchgeführt werden bzw. eine bereits bestehenden Kopplung beispielsweise ohne Störungen einer Ausgabe von Dateninhalten überprüft werden.

Für eine weitere, genauere Näheabschätzung bzw. für den Fall, dass ein Abschätzungsergebnis der Nähebestimmungseinheit z.B. zu ungenau ist, ist es günstig, wenn von einer Mustererkennungseinheit der Kopplungskomponente ein Übereinstimmungsgrad der Parameter des aktuellen Umgebungsmusters mit dem in der Kopplungskomponente gespeicherten, benutzerspezifischen Umgebungsmuster bestimmt wird. Anhand des von der Mustererkennungseinheit ermittelten Übereinstimmungsgrad kann auf einfache Weise automatisch festgestellt werden, ob sich ein mobiles Gerät in der Nähe bzw. Reichweite eines Ausgabegeräts des Benutzers befindet und damit sehr effizient Fehlsteuerungen verhindert werden. Eine Kopplung zwischen einem mobilen Gerät und einem Ausgabegerät kann beispielsweise nur dann durchgeführt werden, wenn ein bestimmter vorgegebener Übereinstimmungsgrad erreicht wird. Wird bei einer neuerlichen Überprüfung der Kopplung festgestellt, dass der Übereinstimmungsgrad unterschritten worden ist, so kann die Kopplung automatisch aufgelöst werden.

Eine neuerliche Überprüfung kann beispielsweise durch einen Trigger, durch welche die Kopplungskomponente angestoßen wird, ausgelöst werden. Als Trigger sind beispielweise ein Timer (Zeitpunkt, Datum), das Feststellen einer Bewegung des mobilen Gerätes, Änderungen bei Signalstärken (z.B. Wireless LAN-Feldstärke, etc.), Feststellen einer Positionsänderung der mobile Gerätes z.B. mittels Global Positioning System, eine Benutzereingabe, etc. denkbar. Dabei wird ebenfalls zuerst eine Nähe zwischen den Geräten abgeschätzt, ist dieses Ergebnis zu ungenau, so wird ein Übereinstimmungsgrad zwischen einem aktuellen und einem gespeicherten, benutzerspezifischen Umgebungsmuster ermittelt. Von der Nähebestimmungseinheit und von der Mustererkennungseinheit wird dabei - insbesondere beim Ausbauen, neuerlichen Überprüfen sowie beim Auflösen von Kopplungen eng zusammengearbeitet. Vorteilhafter Weise werden auch von der Mustererkennungseinheit zum Bestimmen der Übereinstimmungsgrades Methoden der so genannten Fuzzy-Logik eingesetzt.

Als Parameter des aktuellen Umgebungsmusters für einen Näheabschätzung und/oder eine Ermittlung des Übereinstimmungsgrads werden idealer Weise insbesondere einen Feldstärke von Wireless LAN und/oder Bluetooth, eine Senderidentifikation von Wireless LAN und/oder Bluetooth, eine hörbares Audiosignal und/oder eine nicht hörbares Audiosignal verwendet. Alternativ können auch optische Umgebungsparameter, welche beispielsweise mit einer im mobilen Gerät integrierten Kamera aufgenommen werden, Positionsdaten des mobilen Gerätes, welche z.B. mittels Global Positioning System oder über ein Mobilfunknetz, in welchem das mobile Gerät registriert ist, ermittelt werden, etc. zum Bestimmen des Übereinstimmungsgrads mit dem gespeicherten, benutzerspezifischen Umgebungsmuster verwendet werden.

Beim Einsatz von Audiosignalen zum Feststellen der Nähe zwischen mobilen Gerät und Ausgabegerät wird beispielsweise ein spezielles Audiosignal von der Kopplungskomponente an das Ausgabegerät gesendet und dann Umgebungsgeräusche über z.B. ein Mikrophone des mobilen Geräts aufgenommen. Wird in den Umgebungsgeräuschen z.B. das spezielle, ausgesendete Audiosignal wieder erkannt, so ist dies ein sicheres Zeichen, dass sich das mobile Gerät in der Nähe - z.B. im selben Raum - wie das Ausgabegerät befindet. Alternativ kann auch beispielsweise einfach eine Wiedergabe von Audioanteilen einer Dateninhaltswiedergabe mit dem mobilen Gerät aufgezeichnet werden und mit den Audioanteilen, welche vom Ausgabegerät ausgegebenen werden, verglichen werden, um z.B. Nähe zwischen mobilem Gerät und Ausgabegerät oder eine bestehende Kopplung zu überprüfen.

Bei einer zweckmäßigen Ausgestaltung des erfindungsgemäßen Verfahrens wird das zumindest eine zu koppelnde Ausgabegerät mit einem zugehörigen, benutzerspezifischen Umgebungsmuster mit Hilfe einer Registrierungseinheit der Kopplungskomponente registriert. Damit kann auf einfache Weise von Benutzer zumindest eine häufig genutzte Ausgabeeinheit bzw. das zugehörige Umgebungsmuster der Kopplungskomponente bekanntgegeben werden. Dieses zum zumindest einen zu koppelnden Ausgabegerät gehörende benutzerspezifische Umgebungsmuster kann dann in einer Mustererkennungsdatenbank der Kopplungskomponente abgespeichert werden. Das gespeicherte, benutzerspezifische Umgebungsmuster kann damit immer rasch abgerufen und von der Mustererkennungseinheit der Kopplungskomponente für einen Aufbau einer Kopplung mit einem mobilen Geräte und/oder für eine Überprüfung einer Kopplung (z.B. ob diese noch aufrecht gehalten werden soll oder ob das mobile Gerät bereits aus der Nähe des Ausgabegeräts entfernt worden ist) genutzt werden. Von einem Benutzer wird eine zu koppelnde Ausgabeeinheit einmalig über die Registrierungseinheit der Kopplungskomponente registriert und das zugehörige Umgebungsmuster (z.B. Wireless LAN- und/oder Bluetooth-Identifikation, Signalstärke von Wireless LAN und/oder Bluetooth, optische Umgebungsparameter, etc.) aufgenommen und in der Mustererkennungsdatenbank der Kopplungskomponente abgespeichert. Weiterhin können in der Mustererkennungsdatenbank auch Parameter von Umgebungsmusters oder ganze Umgebungsmuster früherer Kopplungsszenarien eines Benutzers sowie entsprechend zugehörige Näheabschätzungsergebnisse und/oder Übereinstimmungsgrad-Ergebnisse dieser Kopplungsszenarien hinterlegt werden. Damit kann von Kopplungselement dann sehr rasch erkannt werden, ob z.B. bei einem Kopplungsvorgang zwischen einem mobilen Gerät und einem Ausgabegerät ein bereits bekanntes Kopplungsszenario vorliegt.

Es ist auch vorteilhaft, wenn ein Status der Koppelung zwischen dem zumindest einen mobilen Gerät und dem zumindest einen zu koppelnden Ausgabegerät in einer Kopplungsstatuseinheit der Kopplungskomponente abgespeichert wird. Damit kann von der Kopplungskomponente auf einfache Weise festgestellt werden, ob eine Kopplung zwischen einem mobilen Gerät und einem Ausgabegerät besteht oder nicht. Bei keiner bestehenden Kopplung kann dann beispielsweise automatisch ein Aufbau einer Kopplung angestoßen werden, wenn ein mobiles Gerät in die Nähe eines Ausgabegerätes gebracht wird. Bei einer bestehenden Kopplung kann z.B. geprüft werden, ob diese noch aufrecht erhalten werden soll, oder ob sich das mobile Gerät nicht mehr in der Nähe des Ausgabegerätes befindet und daher die Kopplung zu trennen ist.

Eine bevorzugte Fortbildung des erfindungsgemäßen Verfahrens sieht vor, dass bei speziellen Dateninhalten, insbesondere nicht jugendfreien Dateninhalten, über eine Sicherheitseinheit der Kopplungskomponente eine zusätzliche Überprüfung der Kopplung zwischen dem zumindest einen mobilen Gerät und dem zumindest einen Ausgabegerät angestoßen wird. Damit kann auf einfache Weise sichergestellt werden, dass beispielsweise spezielle Dateninhalte wie z.B. nicht jugendfreie Inhalte nur ausgegeben werden, wenn der Benutzer, welcher über das mobile Gerät diese Dateninhalte ausgewählt hat, in unmittelbarer Nähe des Ausgabegerätes ist. Gegebenenfalls kann die Überprüfung der Kopplung zwischen dem Ausgabegerät und dem mobilen Gerät über eine Erhöhung bzw. Absenkung von Schwellwerten für z.B. einen Trigger, von welchem die Überprüfung ausgelöst wird, auf Basis von Jugendfreigaben gestartet werden. So ist z.B. bei einer Freigabe der Dateninhalte ab 18 Jahren der Schwellwert für die Überprüfung der Kopplung am höchsten oder am niedrigsten (je nach gewähltem Schwellwert) und es wird beispielsweise bei derartigen Inhalten immer eine Überprüfung durchgeführt. Bei Dateninhalten ab 16 Jahren oder einem niedrigeren Freigabealter kann der Schwellwert für die Überprüfung dementsprechend niedriger bzw. höher gewählt werden.

Weiterhin ist es günstig, wenn von der Kopplungskomponente mit einer Eingabegerätprüfeinheit ein Vorhandensein eines Eingabegerätes, insbesondere einer Fernbedienung, für das zumindest ein Ausgabegerät geprüft wird. Damit kann auf einfache Weise festgestellt werden, ob beispielsweise neben dem mobilen Gerät zur Steuerung des Ausgabegerätes ein alternatives Eingabegerät wie z.B. eine über Infrarot mit dem Ausgabegerät direkt verbundene Fernbedienung für Eingaben (z.B. Lautstärkeregelung, Kanalauswahl, etc.) verwendet wird.

Es ist auch vorteilhaft, wenn von der Kopplungskomponente über eine Autorisierungsschnittstelle Berechtigungen für einen Bezug von Dateninhalten geprüft werden. Über die Autorisierungsschnittstelle kann von der Kopplungskomponente beispielsweise auf Basis von Autorisierungs- und/oder Authentifizierungsdaten (z.B. Benutzerdaten, Kreditkartendaten, Username, Passwort, etc.) festgestellt werden, ob ein Benutzer z.B. bei einem Anbieter von Over-the-Top-Inhalten registriert ist oder berechtigt ist, bestimmte Dateninhalte wie z.B. kostenpflichtige Videodaten zu beziehen. Damit kann auf einfache Weise ein unberechtigter Bezug von Dateninhalten verhindert werden.

Weiters erfolgt die Lösung der Aufgabe durch ein System der eingangs erwähnten Art, welches zur Durchführung des erfindungsgemäßen Verfahrens eingerichtet ist, wobei eine Kopplungskomponente zur Bestimmung des zumindest einen zu koppelnden Ausgabegerätes derart vorgesehen ist, dass auf Basis eines gespeicherten, benutzerspezifischen Umgebungsmusters das zumindest eine zu koppelnde Ausgabegerät bestimmbar ist und dynamisch eine Kopplung mit dem zumindest einen mobilen Gerät herstellbar ist.

Der Hauptaspekt des erfindungsgemäßen Systems besteht darin, dass über die Kopplungskomponente verschiedene mobilen Geräte (z.B. Smartphone, Tablet-PC, etc.) eines Benutzer dynamisch, flexible und automatisch über ein zelluläres Kommunikationsnetz (z.B. Internet) mit zumindest einem Ausgabegerät des Benutzers (z.B. Fernsehgerät, TV-Set) gekoppelt werden können. Dabei können vom Benutzer beliebige mobile Geräte und Ausgabegeräte verwendet werden, d.h. von der Kopplungskomponente werden Geräte von beliebigen Herstellern gekoppelt - die Kopplungskomponente ist damit herstellerunabhängig und bietet dem Benutzer damit eine sehr hohe Flexibilität.

Die Kopplungskomponente kann dabei beispielsweise als im zellulären Kommunikationsnetz verfügbare Komponente ausgestaltet sein, welche von den mobilen Geräten sowie von zu koppelnden Ausgabegeräten kontaktierbar ist oder Anwendungen aufweist, welche z.B. als so genannte ablauffähige Applikationen auf den mobilen Geräten und auf den Ausgabegeräten oder als Verbindungen (z.B. Weblinks) zur Kopplungskomponente ausgestaltet sind. Dadurch kann ein Kontakt zur Kopplungskomponente ortsunabhängig und rasch aufgebaut werden und auf Basis eines gespeicherten, benutzerspezifischen Umgebungsmusters eine Kopplung zwischen den mobilen Geräten und den Ausgabegeräten automatisch und ohne aufwendige Benutzerinteraktion hergestellt werden. Vom Benutzer kann dann ein mobiles Gerät zur Steuerung der Auswahl und/oder Ausgabe von Dateninhalten in gewohnter Weise bzw. mit einer gewohnten Navigation genutzt werden. Die Ausgabe der Dateninhalte kann zusätzlich von der Kopplungskomponente an die Eigenschaften des Ausgabegerätes (z.B. verfügbare Bildschirmfläche, Bandbreite, Pixelgröße, High Definition-Abspielkapazitäten, etc.) angepasst werden. Zusätzlich besteht die Möglichkeit verfügbare Ausgabegeräte (z.B. Fernsehgerät, Display eines Smartphones, Display eine Tablet-PCs) parallel für die Präsentation von Dateninhalten zu nutzen. So kann beispielsweise ein Display eines Smartphones für einen Anzeige eines Überblicks von Dateninhalten und zum Navigieren durch Dateninhalte (z.B. Anzeige einer elektronischen Programmübersicht, etc.) eingesetzt werden, während parallel auf einem Fernsehgerät ein ausgewählter Dateninhalt (z.B. Videodaten) angezeigt werden. Es können auch Zusatzinformationen (z.B. Produktinformationen, etc.) zu einem auf der Ausgabeeinheit ablaufenden Dateninhalt z.B. auf dem Display des mobilen Gerätes abgerufen werden.

Es ist vorteilhaft, wenn die Kopplungskomponente eine Triggereinheit zum Anstoßen für ein Herstellen der Kopplung und eine Nähebestimmungseinheit zum Abschätzen einer Nähe zwischen mobilen Geräten und Ausgabegeräten und eine Mustererkennungseinheit zum Vergleichen des gespeicherten, benutzerspezifischen Umgebungsmusters mit Parametern eines von dem zumindest einen mobilen Gerät aktuell ermittelten Umgebungsmusters ausweist. Über die Triggereinheit kann automatisch - beispielsweise anhand von Parametern wie z.B. einem Timer (z.B. Zeitpunkt, Datum, etc.), einer Position eines mobilen Gerätes, einer Bewegung des mobilen Geräte, welche z.B. über eingebaute Sensoren wie z.B. Accelerometer, Gyroskop, etc. feststellbar ist, Änderungen bei Signalstärken (z.B. Wireless LAN-Feldstärke, etc.)oder einer Benutzereingabe - ein Aufbau einer Kopplung zwischen einem mobilen Gerät und einem Ausgabegerät gestartet oder eine bestehende Kopplung überprüft werden. Mit der Nähebestimmungseinheit wird dann auf einfache Weise anhand von Parametern des aktuell ermittelten Umgebungsmusters z.B. mittels Fuzzy-Logik oder Wahrscheinlichkeitsrechnungsmethoden eine örtliche Nähe zwischen einem mobilen Gerät und einem Ausgabegerät abgeschätzt. Damit wird sehr rasch eine Aussage erhalten, ob ein mobiles Gerät und ein Ausgabegerät beispielsweise zum selben Kopplungsszenario gehören - d.h. koppelbar sind, weil eine entsprechende örtliche Nähe (z.B. im selben Raum) vorliegt.

Für eine genauere Abschätzung, ob das mobiles Gerät sich in der Nähe eines Ausgabegeräts befindet, kann dann von der Mustererkennungseinheit anhand von Parametern des gespeicherten, benutzerspezifischen Umgebungsmusters, welches mit den Parametern des aktuellen, vom mobilen Gerät ermittelten Umgebungsmuster verglichen wird, ein Übereinstimmungsgrad bestimmt werden. Durch eine kaskadierte Zusammenarbeit von Nähebestimmungseinheit und Mustererkennungseinheit wird einerseits verhindert, dass eine Kopplung zu einem entfernten Ausgabegerät aufgebaut wird. Auf diese Weise wird immer jenes Ausgabegerät mit dem mobilen Gerät gekoppelt, das in entsprechender Nähe - d.h. z.B. im selben Raum - ist. Andererseits kann eine Kopplung zwischen einem mobilen Gerät und einem Ausgabegerät automatisch beendet werden, wenn das mobile Gerät aus der Nähe des Ausgabegeräts entfernt wird.

Eine zweckmäßige Weiterbildung des erfindungsgemäßen Systems sieht vor, dass die Kopplungskomponente eine Registrierungseinheit zum Registrieren zu koppelnder Ausgabegeräte und eine Mustererkennungsdatenbank zum Abspeichern zugehöriger, benutzerspezifischer Umgebungsmuster umfasst. Bei der Registrierungseinheit können zu koppelnde Ausgabegeräte mit zugehörigen, benutzerspezifischen Umgebungsmustern für eine rasche und einfache Kopplung bei der Kopplungskomponente registriert werden. Für das Abspeichern und ein rasches Wiederfinden der benutzerspezifischen Umgebungsmuster wird dann die Mustererkennungsdatenbank eingesetzt. Die Mustererkennungsdatenbank kann dann auf einfache Weise beim Aufbau oder bei einer Überprüfung einer Kopplung der Nähebestimmungskomponente ein benutzerspezifisches Umgebungsmuster des jeweiligen Ausgabegerätes für den Vergleich mit den Parametern des aktuellen, vom mobilen Gerät ermittelten Umgebungsmuster zur Verfügung stellen. Zusätzlich können in der Mustererkennungsdatenbank auch Parameter von Umgebungsmusters oder ganze Umgebungsmuster früherer Kopplungsszenarien eines Benutzers sowie entsprechend zugehörige Näheabschätzungsergebnisse und/oder Übereinstimmungsgrad-Ergebnisse dieser Kopplungsszenarien hinterlegt werden.

Idealer Weise umfasst die Kopplungskomponente eine Kopplungsstatuseinheit zum Abspeichern eines Status der Koppelung. Damit wird auf rasche Weise erkannt, ob eine Kopplung zwischen einem mobilen Gerät und einem Ausgabegerät besteht, welche beispielsweise auf ihre Aktualität überprüft und gegebenenfalls beendet werden muss, oder ob eine Kopplung zwischen einem mobilen Gerät und einem Ausgabegerät aufgebaut werden muss.

Eine bevorzugte Ausgestaltung des erfindungsgemäßen Systems sieht vor, dass die Kopplungskomponente weiterhin eine Sicherheitseinheit zum Anstoßen einer zusätzlichen Überprüfung der Kopplung bei speziellen Dateninhalten, insbesondere nicht jugendfreien Dateninhalten, eine Eingabegerätprüfeinheit zum Überprüfen eines Vorhandenseins zusätzlicher, zum jeweiligen Ausgabegerät gehörender Eingabegeräte, insbesondere einer Fernbedienung und eine Autorisierungsschnittstelle zum Prüfen von Berechtigungen für einen Bezug von Dateninhalten aufweist.

Mit Hilfe der Sicherungseinheit kann bei Aufruf spezieller Dateninhalte, insbesondere nicht jugendfreier Dateninhalte, die Kopplung zusätzlich geprüft werden. Damit kann auf einfache Weise sichergestellt werden, dass beispielsweise spezielle Dateninhalte wie z.B. nicht jugendfreie Inhalte nur ausgegeben werden, wenn der Benutzer, welcher über das mobile Gerät diese Dateninhalte ausgewählt hat, in unmittelbarer Nähe des Ausgabegerätes ist. Es wird damit sehr einfach verhindert, dass die speziellen Dateninhalte nicht aufgrund einer zufälligen Kopplung eines mobilen Gerätes mit einem Ausgabegerät oder aufgrund einer fälschlich bestehenden Kopplung angezeigt werden.

Über die Eingabegerätprüfeinheit wird festgestellt, ob eine alternative Eingabeeinheit wie z.B. eine direkt mit dem Ausgabegerät verbundene Eingabeeinheit (z.B. Infrarot-Fernbedienung) vorhanden und z.B. zur Steuerung des Ausgabegeräts (z.B. Lautstärkeregelung, Kanalwechsel, etc.) zusätzlich verwendet wird.

Mit der Autorisierungsschnittstelle kann von der Kopplungskomponente auf einfache Weise geprüft werden, ob ein Benutzer zum Bezug von Dateninhalten (z.B. kostenpflichtige Inhalte, etc.) z.B. bei einem Anbieter dieser Dateninhalte berechtigt ist. Dazu können benutzerspezifische Berechtigungen z.B. auf Basis von Autorisierungs- und/oder Authentifizierungsdaten (z.B. Benutzerdaten, Kreditkartendaten, Username, Passwort, etc.) geprüft werden. Die Dateninhalte werden dem Benutzer erst nach erfolgreicher Überprüfung auf dem Ausgabegerät angezeigt und ein unberechtigter Bezug von Dateninhalten damit verhindert.

Vorteilhafter Weise ist als mobiles Gerät, welches zur Steuerung der Auswahl und/oder Ausgabe von Dateninhalten einsetzbar ist, insbesondere ein so genanntes Smartphone, ein so genannter Tablet-PC und/oder ein Laptop vorgesehen. Diese Geräte können leicht transportiert werden und daher vom Benutzer einfach in die Nähe des Ausgabegerätes gebracht werden. Zusätzlich weisen derartige Geräte üblicherweise eine Anbindung zu einem zellulären Kommunikationsnetz, insbesondere dem Internet, auf und eine Handhabung (z.B. mittels Tastatur, Touchscreen, etc.) ist dem Benutzer vertraut. Weiterhin verfügen diese Geräte über ein Display, welchen Informationen für die Steuerung von Auswahl und/oder Ausgabe von Dateninhalten auf einfache Weise angezeigt werden kann.

Es ist günstig, wenn als Ausgabegerät, insbesondere für eine Anzeige der Dateninhalte, eine Bildschirmeinheit eines TV-Gerätes, eines so genannten Smartphones, eines so genannten Tablet-PCs oder eines Laptops verwendbar ist. Bei einem Fernsehgerät oder TV-Set bzw. dem zugehörigen Bildschirm als Ausgabeeinheit können Dateninhalte übersichtlich und in guter Qualität (z.B. Videodaten) angezeigt werde. Durch eine zusätzliche Verwendung von Bildschirmeinheiten wie z.B. Displays von Smartphones, Tablet-PCs, etc. besteht die Möglichkeit zwischen den Ausgabeeinheiten hin- und herzuschalten. Es können auf diese Weise Dateninhalte weiterhin angesehen werden, auch wenn sich der Benutzer von einer ortsgebundenen Ausgabeeinheit (z.B. Fernsehgerät, etc.) wegbewegt. Es kann nahtlos ohne Störung der Datenausgabe zwischen den Ausgabegeräten umgeschaltet werden - unter Verwendung einer bei dem jeweiligen Ausgabegerät gewohnten Navigationsweise. Zusätzlich ermöglicht eine Nutzung der Displays von mobilen Geräten wie z.B. Smartphones, Tablet-PC, etc. eine parallel Ausgabe von unterschiedlichen Dateninhalten - so kann beispielsweise auf dem Smartphone oder Tablet-PC eine Programmübersicht, eine Vorschau auf weitere Dateninhalte, etc. angezeigt werden und auf dem Bildschirm des Fernsehgerät z.B. ungestört ein Videofilm ablaufen. Von einem Benutzer können nahtlos und automatisch Zusatzinformation zu gewählten Dateninhalten genutzt werden wie z.B. Meta-Informationen, zusätzliche Informationen, zusätzliche Datenangebote, etc.), ohne dass eine Ausgabe und ein Ablauf von einem gewählten Dateninhalt gestört wird.

Es ist vorteilhaft, wenn als zelluläres Kommunikationsnetz insbesondere das Internet vorgesehen ist. Damit können auf einfache Weise verschiedene Dateninhalte - so genannte Over-the-Top-Inhalte - von verschiedenen Anbietern ohne großen Aufwand abgerufen werden.

### Kurzbeschreibung der Zeichnung

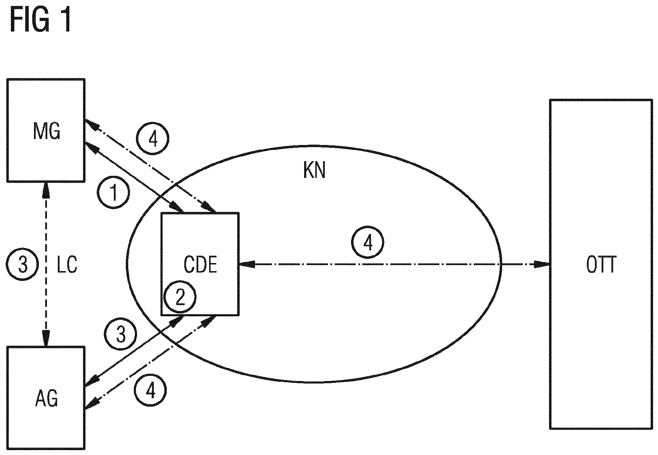

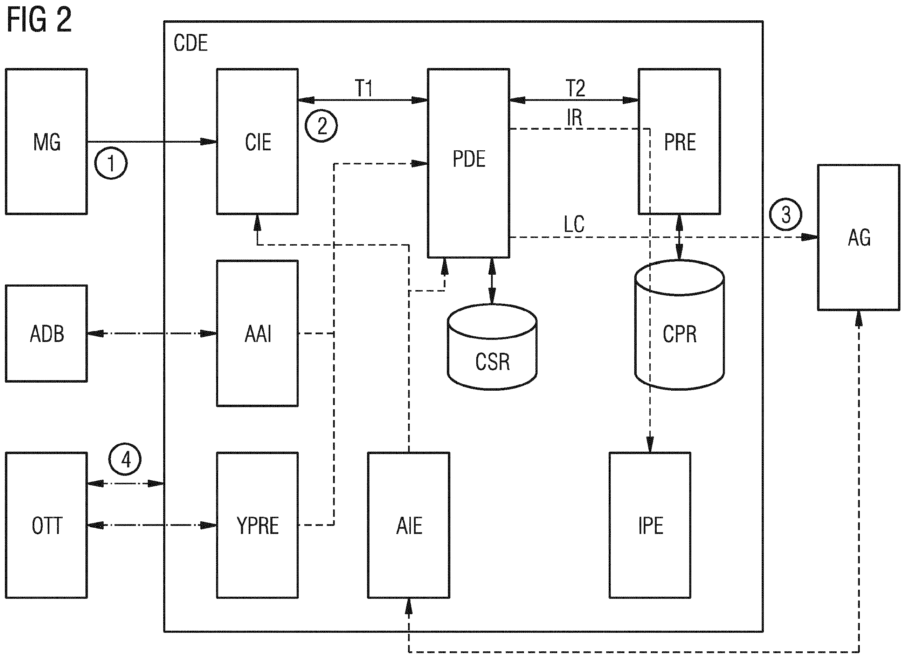

Die Erfindung wird nachfolgend schematisch in beispielhafter Weise anhand der beigefügten Figuren erläutert. Dabei zeigt Figur 1 beispielhaft und schematisch einen Ablauf des erfindungsgemäßen Verfahrens sowie das System zur Durchführung des erfindungsgemäßen Verfahrens mit einer schematischen Over-the-Top-Infrastuktur zur Auslieferung von Dateninhalten. Figur 2 zeigt in schematischer Weise beispielhaft einen detaillierten Aufbau des erfindungsgemäßen Systems, insbesondere einer Kopplungskomponente.

### Ausführung der Erfindung

Figur 1 zeigt in schematischer Weise und beispielhaft das System zur Durchführung des erfindungsgemäßen Verfahrens. Das erfindungsgemäße System umfasst dabei zumindest ein mobiles Gerät MG wie z.B. ein Smartphone, einen so genannten Tablet-PC oder Laptops, etc. Das zumindest eine mobile Gerät MG ist dabei zur Steuerung einer Auswahl und/oder Ausgabe von Dateninhalten vorgesehen. Das mobile Gerät MG soll dabei z.B. wie eine Fernbedienung eingesetzt werden, auf welchem auszuwählenden Dateninhalte wie z.B. Videos, etc. angezeigt werden und vom Benutzer in für das jeweilige mobile Gerät MG gewohnter Weise z.B. mittels Tastatur, Touchscreen, Maus, etc. angewählt werden können.

Weiterhin umfasst das erfindungsgemäße System zumindest ein Ausgabegerät AG wie z.B. eine Bildschirmeinheit, ein Fernsehgerät, eine so genannte Media-Box mit Ausgabebildschirm, etc. Auf dem Ausgabegerät AG werden dann die vom Benutzer gewählten Dateninhalte angezeigt. Zum Bereitstellen der Dateninhalte, insbesondere so genannter Over-the-Top-Inhalte, ist ein zelluläres Kommunikationsnetz KN vorgesehen. Dabei ist als zelluläres Kommunikationsnetz KN insbesondere das Internet vorgesehen, über welches von beliebigen Anbietern OTT Dateninhalte als so genannter Over-the-Top-Inhalt bezogen werden kann. Derartige Anbieter OTT von Dateninhalten sind beispielsweise Video-on-Demand-Stores, Fernsehanbieter, welche Video- und/oder Audioinhalten auch über ein zelluläres Kommunikationsnetz KN bzw. das Internet zur Verfügung stellen, etc. oder ein Anbieter, welcher Dateninhalte bzw. eine Datenbank mit Dateninhalten online bereit stellt.

Weiterhin weist das erfindungsgemäße System eine Kopplungskomponente CDE auf, welche zur Bestimmung des zumindest einen zu koppelnden Ausgabegerät AG vorgesehen ist. Die Kopplungskomponente CDE ist dabei derart ausgeführt, dass auf Basis eines gespeicherten, benutzerspezifischen Umgebungsmusters das zumindest eine zu koppelnde Ausgabegerät AG bestimmbar ist und dynamisch mit dem zumindest einen mobilen Gerät MG gekoppelt wird. Die Kopplungskomponente CDE ist eine Komponente des erfindungsgemäßen Systems zur Entscheidungsfindung, welche - wie in Figur 2 schematisch und beispielhaft dargestellt - ein Set von Einheiten umfasst, mit deren Hilfe entscheidbar ist, ob zwei oder mehr mobile Geräte MG mit einem oder mehreren Ausgabegeräten AG gekoppelt werden sollen. Dabei werden von der Kopplungskomponente CDE dann eine Darstellung der Dateninhalte (z.B. Anzahl der gezeigten Dateneinheiten, etc.) sowie verfügbare Optionen für den Benutzer - entsprechend dem jeweiligen Ausgabegerät AG (z.B. Bildschirm, Display eines Smartphones, Display eines Tablet-PCs, etc.) - bestimmt. Von der Kopplungskomponente CDE wird damit ein Verhalten von allen in einem Kopplungsszenario eingebundenen Geräten MG, AG gelenkt. Von der Kopplungskomponente CDE können damit eine Kopplung LC bzw. eine Entkopplung von einem mobilen Geräte MG und einem Ausgabegerät AG initialisiert sowie validiert werden.

Die Kopplungskomponente CDE kann dabei z.B. als im zellulären Kommunikationsnetz KN ablauffähige Anwendung ausgeführt sein, welche beispielsweise vom mobilen Gerät MG und gegebenenfalls auch vom Ausgabegerät AG z.B. mittels eines so genannten Weblinks angewählt wird. Es ist aber auch möglich, dass die Kopplungskomponente als so genannte Applikaition bzw. App ausgestaltet ist, welche zumindest teilweise auf dem mobilen Gerät MG bzw. gegebenenfalls dem Ausgabegerät AG abläuft. Auch eine Ausgestaltung der Kopplungskomponenten CDE als so genannte Pseudo-App ist denkbar.

Das erfindungsgemäße Verfahren für ein dynamisches Koppeln von zumindest einem mobilen Gerät MG mit zumindest einem Ausgabegeräte AG, welche vom in Figur 1 schematisch und beispielhaft dargestelltem System durchgeführt wird, beginnt mit einem ersten Verfahrensschritt 1. Im ersten Verfahrensschritt 1 wird von einem mobilen Gerät MG (z.B. Smartphone, Tablet-PC, etc.) über ein zelluläres Kommunikationsnetz KN wie z.B. dem Internet eine Kopplungskomponente CDE angestoßen. Die Kopplungskomponente CDE kann dabei eine im zellulären Kommunikationsnetz KN aufrufbare und ablauffähige Anwendung (z.B. eine Website oder ein Weblink) sein. Die Kopplungskomponente CDE kann aber auch derart ausgestaltet sein, dass sie teilweise als Applikation - so genannte App - oder als so genannte Pseudo-App auf dem mobilen Gerät MG, aber auch auf einem zu koppelnden Ausgabegerät AG abläuft. Von diesen Applikationen bzw. Pseudo-Apps kann dann über eine im Kommunikationsnetz KN aufrufbare und ablauffähige Anwendung nach erfolgter dynamischer Kopplung LC interagiert werden. Der Applikationsteil der Kopplungskomponente CDE kann dabei beispielsweise bei einem einmaligen Initialisierungs- und/oder Registrierungsvorgang auf die jeweiligen mobilen Geräte MG bzw. Ausgabegeräte AG geladen werden bzw. diese Geräte MG, AG bei der Kopplungskomponente CDE resistiert werden.

In einem zweiten Verfahrensschritt 2 wird von der Kopplungskomponente CDE auf Basis eines gespeicherten, benutzerspezifischen Umgebungsmusters das zumindest eine zu koppelnde Ausgabegerät AG bestimmt. Dabei wird beispielsweise ein aktuelles Umgebungsmuster vom mobilen Gerät MG ermittelt und dann auf Basis von Parametern des aktuellen Umgebungsmusters wie z.B. Feldstärken von drahtlosen Kommunikationsnetzen und/oder Standards zur Datenübertragung (z.B. Wireless LAN, Bluetooth, etc.), Senderidentifikationen von Wireless LAN, Bluetooth, etc., hörbare Audiosignale, nicht hörbare Audiosignale, optische Signal (z.B. optische Muster, etc.) eine Abschätzung einer Nähe zwischen dem mobilen Gerät MG und dem zu koppelnden Ausgabegerät AG durchgeführt. Für eine derartige Näheabschätzung werden insbesondere Methoden der Fuzzy-Logik und/oder der Wahrscheinlichkeitsrechnung eingesetzt. Die Näheabschätzung in der Kopplungskomponente CDE erfolgt dabei idealer Weise kaskadiert - d.h. es wird zuerst anhand einiger Parameter aus dem aktuellen Umgebungsmuster eine Nähe zwischen mobilen Gerät MG und Ausgabegerät AG abgeschätzt und bei einer unzureichenden Näheabschätzung auf weitere Parameter bzw. Mustervergleiche zurückgegriffen.

Ist die Näheabschätzung zu ungenau oder kann daraus das zu koppelnde Ausgabegerät AG nicht bestimmt werden, so können beispielsweise Parameter eines aktuellen Umgebungsmusters mit dem gespeicherten, benutzerspezifischen Umgebungsmuster von der Kopplungskomponente CDE verglichen werden. Auf Basis dieses Vergleichs wird dann ein Übereinstimmungsgrad z.B. mit Methoden der Fuzzy-Logik abgeschätzt und dann eine Entscheidung getroffen, ob ein mobiles Gerät MG mit einem Ausgabegerät AG zu koppeln ist - d.h. die beiden Geräte MG, AG befinden sich in einer entsprechenden Nähe zueinander und es besteht keine Gefahr, dass ein anderes (entferntes) Ausgabegerät AG unabsichtlich bzw. ungewollt mit dem mobilen Gerät MG gesteuert wird.

Als gespeichertes, benutzerspezifisches Umgebungsmuster kann z.B. ein beim Initialisierungs- und/oder Registrierungsvorgang gespeichertes zum jeweiligen Ausgabegerät eines Benutzers gehörendes Umgebungsmuster verwendet werden. Es ist aber auch denkbar, dass für den Vergleich Umgebungsmuster eines Benutzers herangezogen werden, welche aus früheren z.B. erfolgreichen Kopplungsvorgängen bekannt sind. Von der Kopplungskomponente CDE wird dabei auf gespeicherte Informationen zurückgegriffen. Derartige Informationen sind z.B. situationsspezifische Parameter (z.B. Audiosignale, optische Daten, Feldstärken, etc.), welche aus früheren Kopplungsszenarien bekannt sind.

Wurde von der Kopplungskomponente CDE im zweiten Verfahrensschritt 2 aufgrund von Näheabschätzung und/oder Abschätzung eines Übereinstimmungsgrades zwischen gespeichertem und aktuellem Umgebungsmuster eine ausreichende Nähe zwischen mobilen Gerät MG und dem Ausgabegerät AG festgestellt, so wird im einem dritten Verfahrensschritt 3 eine Kopplung LC dynamisch und automatisch zwischen dem mobilen Gerät MG und dem zu koppelnden Ausgabegerät AG durchgeführt. Die Kopplung LC ist dabei jeder Zeit - insbesondere wenn das mobile Gerät MG vom Ausgabegerät AG wegbewegt wird - wieder automatisch auflösbar.

Ist die Kopplung LC zwischen mobilem Gerät MG und Ausgabegerät AG hergestellt, so können in einem vierten Verfahrensschritt 4 beispielsweise Dateninhalte vom einem Anbieter OTT über das zelluläre Kommunikationsnetz KN angefordert und die Ausgabe dieser Dateninhalte auf dem Ausgabegerät AG mit dem mobilen Gerät MG gesteuert werden. Dabei kann z.B. je nach mobilen Gerät MG bzw. Ausgabegerät AG eine Anzeige der Dateninhalte von der Kopplungskomponente CDE beeinflusst werden. So kann beispielsweise auf einer Anzeige des mobilen Geräts MG für die Steuerung eine Übersicht, Auswahl, etc. der bei einem Anbieter OTT abgerufenen Dateninhalte dargestellt werden, während auf dem Ausgabegerät AG der Dateninhalt selbst (z.B. Videodaten, etc.) präsentiert werden. Auch die für den Benutzer verfügbaren Optionen können dabei von der Kopplungskomponente CDE - je nach mobilen Gerät MG bzw. Ausgabegerät AG - gesteuert werden.

So kann z.B. einem Benutzer beim Abrufen von Videodaten von einem Anbieter OTT über das Kommunikationsnetz KN am mobilen Gerät MG (z.B. Smartphone, Tablet-PC, etc.) so genannte Video-Covers oder Video-Trailers angezeigt werden. Vom Benutzer kann dann z.B. ein spezieller Dateninhalte (z.B. Videofilm) am mobilen Gerät MG ausgewählt werden, welche für das Abspielen auf das Ausgabegerät AG (z.B. Fernseh-Bildschirm) transferiert wird. Weiterhin besteht aber auch die Möglichkeit beispielsweise zwischen dem Ausgabegerät AG und einer Anzeige des mobilen Geräts MG oder zwischen zwei Ausgabegeräten AG umzuschalten oder z.B. das Ausgabegerät AG und das mobile Gerät MG bzw. dessen Anzeige parallel zu nutzen. So können beispielsweise am Ausgabegerät AG Dateninhalte wie z.B. ein Videofilm, Werbung, etc. abgespielt werden und am mobilen Gerät können z.B. parallel dazu Informationen zum Videofilm, Informationen zu beworbenen Produkten, eine Programmvorschau und/oder ein elektronischer Programmführer, etc. abgefragt und angezeigt werden. Von Benutzer kann damit übergangslos und automatisch mit zusätzlichen und/oder ergänzenden Dateninhalten interagiert werden, ohne dass beispielsweise eine Ausgabe von gewählten Dateninhalten am Ausgabegerät gestört bzw. unterbrochen wird.

Figur 2 zeigt in schematischer Weise beispielhaft einen detaillierten Aufbau des erfindungsgemäßen Systems, insbesondere der Kopplungskomponente CDE.

Das erfindungsgemäße System umfasst dabei wieder zumindest ein mobiles Gerät MG (z.B. Smartphone, Tablet-PC, etc.) sowie zumindest ein Ausgabegerät AG wie z.B. eine Bildschirmeinheit (z.B. Fernsehgerät, Bildschirm, Display, etc.). Mit dem zumindest einen mobilen Gerät MG wird eine Ausgabe und/oder Anzeige von Dateninhalten gesteuert. Die Dateninhalte werden dabei als so genannte Over-the-Top-Inhalte von Anbietern OTT über ein zelluläres Kommunikationsnetz KN wie z.B. dem Internet zur Verfügung gestellt werden. Die Dateninhalte werden dabei von Anbietern OTT (z.B. Medienunternehmen, etc.) entweder kostenlos oder kostenpflichtig angeboten und können vom Benutzer über eine einfache Website und/oder von einer auf dem Internet-Protokoll (IP) basierenden Umgebung geladen werden. Damit wird eine Lieferung der Dateninhalte aus einer abstrahierten IP-basierten Infrastruktur - der so genannten IP-Cloud - eines oder mehrerer Anbieter OTT heraus durchgeführt. Die IP-basierte Infrastruktur des Anbieters OTT kann beispielsweise Mediadatenbanken, in welche die Dateninhalte (z.B. Videodaten, Audiodaten, etc.) hinterlegt sind, Datenbanken mit Zusatzinformationen zu den Dateninhalten (z.B. für Jugendschutz, etc.) oder ähnliche Infrastruktur umfassen. Zusätzlich kann insbesondere für einen Bezug eine Datenbank ADB vorgesehen sein, über welche z.B. geprüft werden kann, ob ein Benutzer zum Bezug bestimmter Dateninhalte berechtigt ist - d.h. diese z.B. subskribiert, gekauft, etc. hat. Diese Rechtedatenbank ADB kann z.B. beim Anbieter OTT der Dateninhalte untergebracht sein oder von einem anderen Anbieter OTT betrieben werden.

Weiterhin umfasst das erfindungsgemäße System eine Kopplungskomponenten CDE, über welche die zu koppelnden Geräte MG, AG bestimmt werden und dann eine dynamische Kopplung LC der Geräte MG, AG durchgeführt wird. Die Kopplungskomponente CDE, welche zur Entscheidungsfindung für eine dynamische Kopplung LC zwischen zumindest einem mobilen Gerät MG und zumindest einem Ausgabegerät AG eingesetzt wird, weist dabei ein Set von Einheiten auf, welche an dieser Entscheidungsfindung beteiligt sind und/oder noch zusätzliche Funktionen zur Verfügung stellen.

Die Kopplungseinheit CDE umfasst eine Triggereinheit CIE, über welche im ersten Verfahrensschritt 1 die Kopplungseinheit CDE vom mobilen Gerät MG angestoßen wird. Von der Triggereinheit CIE wird ein dynamischer Kopplungsprozess zwischen einem mobilen Gerät MG und einer Ausgabeeinheit initiiert. Aber auch eine Entkopplung der Geräte MG, AG wird von der Triggereinheit CIE gestartet. Für den Anstoß der Triggereinheit CIE werden beispielsweise Parameter, welche vom mobilen Gerät ausgenommen und/oder festgestellt werden, und/oder deren Veränderung verwendet. Parameter, welche von der Triggereinheit CIE als Initiation eine Kopplungs- oder Entkopplungsprozesses verwendet werden können, sind beispielsweise ein Timer (z.B. Datum, Zeitpunkt), Bewegungen, welche vom mobilen Gerät MG ausgeführt und mittels eingebauter Sensoren wie z.B. Accelerometer, Gyroskope, etc, festgestellt werden, Veränderungen von Feldstärke und/oder Service Set Identifier (SSID) eines Wireless LANs, Veränderung von GPS-Daten des mobilen Geräts MG, spezielle Benutzereingaben (z.B. ein so genanntes SWIPE-Kommando, etc.), eine Eingabe für erstmaligen Registrierung eines Ausgabegeräte AG, etc.

Wird nun von der Triggereinheit CIE ein oder mehrere derartige Parameter bzw. Parameterveränderungen festgestellt, so wird im zweiten Verfahrensschritt 2 der Entscheidungsprozess über eine Kopplung LC bzw. Entkopplung von Geräten MG, AG angestoßen. Dazu wird von der Triggereinheit CIE ein erster Trigger T1 an eine Nähebestimmungseinheit PDE gesendet. Zusätzlich können von der Triggereinheit CIE - insbesondere aufgrund der kaskadierten Näheabschätzung - zusätzliche Maßnahmen (z.B. Prüfung der Nähe zwischen mobilen Gerät MG und Ausgabegeräte AG auf Basis von hörbaren und/oder nicht hörbaren Audiosignalen, etc.) veranlasst werden.

Von der Nähebestimmungseinheit PDE wird insbesondere mittels Methoden der Fuzzy-Logik eine Wahrscheinlichkeit abgeschätzt, welche Nähe zwischen zumindest einem mobilen Gerät MG und zumindest einem Ausgabegerät AG besteht, und ob daher eine Kopplung LC herstellbar ist bzw. bestehen bleiben soll. Für die Näheabschätzung werden von der Nähebestimmungseinheit PDE Parameter eines aktuellen Umgebungsmusters herangezogen, welche vom anstoßenden mobilen Gerät MG geliefert werden. Zusätzlich können - aufgrund der kaskadierten Vorgehensweise - von der Nähebestimmungseinheit PDE zusätzliche Maßnahmen zur Nähebestimmung (z.B. Audiosignale, etc.) angefordert werden. Parameter eines aktuellen Umgebungsmuster eines mobilen Gerät MG, auf deren Basis eine Nähe zu einem Ausgabegerät AG für eine dynamische Kopplung LC bestimmt werden kann, sind beispielsweise: Service Set Identifier (SSID) von Wireless LAN, Feldstärke von Wireless LAN, Bluetooth Sender-Identifikation, Bluetooth-Feldstärke, ein optisches Muster (z.B. mittels Kameraaufnahme durch das mobile Gerät MG), Audiosignale (hörbar, nicht hörbar), Lautstärke von Audiosignalen, Geräuschmuster, Orientierung bzw. Koordinaten/GPS-Daten des mobilen Gerätes MG, 3G-Netz (z.B. bei einem Smartphone) bzw. die Feldstärke des 3G-Netzes, Mobile Network Fingerprint, Magnetfeldstärke, etc. Im Prinzip können Parameter herangezogen werden, welche auf einfache Weise mittels Sensoren des mobilen Geräts MG wie z.B. Kamera, Mikrophone, Funkteil, GPS, etc. ermittelt werden können, und anhand deren auf einfache Weise eine Umgebung wieder erkennbar ist.

Nach der Aktivierung durch die Triggereinheit CIE wird von der Nähebestimmungseinheit in kaskadierter Form gearbeitet. D.h. von der Nähebestimmungseinheit PDE werden zuerst für eine Näheabschätzung nur wenige Parameter des aktuellen Umgebungsmusters des mobilen Gerätes MG in Betracht gezogen, da die Entscheidung über Nähe zwischen mobilem Gerät MG und Ausgabegerät AG meist zeitkritisch ist und insbesondere bei Prüfung einer bestehenden Kopplung LC auch eine Wiedergabe von Dateninhalte auf der Ausgabeeinheit AG stören kann.

Für eine genauere Näheabschätzung bzw. auch für eine Entscheidungsfindung, ob Ausgabegerät AG mit einem oder mehreren mobilen Geräten MG zu koppeln bzw. zu entkoppeln ist, wird über einen zweiten Trigger T2 eine Mustererkennungseinheit PRE aufgerufen. Von der Mustererkennungseinheit PRE wird ein aktuelles Umgebungsmuster bzw. werden Parameter eines aktuellen Umgebungsmusters des mobilen Geräts mit einem gespeicherten, benutzerspezifischen Umgebungsmuster, welches zum Bestimmen des zu koppelnden Ausgabegerätes AG herangezogen wird, verglichen und ein Übereinstimmungsgrad dieser Umgebungsmuster bestimmt. Die benutzerspezifischen Umgebungsmuster für den Vergleich sind in einer Mustererkennungsdatenbank CPR hinterlegt und werden von der Mustererkennungseinheit PRE von dort abgerufen.

Die Mustererkennungseinheit PRE ist dabei eine Entscheidungs- und Vergleichsinstanz, von welche aktuelle Situations- und Umgebungsparameter eines mobilen Gerätes MG mit benutzerspezifischen Situations- und Umgebungsparametern von früheren Kopplungsszenarien und/oder Kopplungsentscheidung eines Benutzers verglichen werden. Die Entscheidung bzw. die Abschätzung eines Übereinstimmungsgrads zwischen aktuellem und früherem, benutzerspezifischen Umgebungsmuster bzw. den entsprechenden Parametern wird mittels Methoden der Fuzzy-Logik von der Mustererkennungseinheit PRE durchgeführt. Das Ergebnis des Entscheidungsprozesses der Mustererkennungseinheit PRE ist damit eine Abschätzung eines Übereinstimmungsgrads einer aktuellen Kopplungssituation mit früheren Kopplungssituationen eines Benutzers bzw. dessen mobilen Geräten MG und Ausgabegeräten AG. Weiterhin, kann die Mustererkennungseinheit PRE für die Abschätzung z.B. auch Ergebnisse und/oder Fehler von früheren Umgebungsmuster-Vergleichen heranziehen.

Die Nähebestimmungseinheit PDE und die Mustererkennungseinheit PRE sind damit die entscheidenden Einheiten der Kopplungskomponente CDE, durch welche eine Wahrscheinlichkeit abgeschätzt wird, ob sich ein mobiles Gerät MG in (unmittelbarer) Nähe zu einem Ausgabegerät AG befindet. Ist diese Wahrscheinlichkeit hoch - d.h. wird von der Nähebestimmungseinheit PDE und von der Mustererkennungseinheit PRE eine entsprechende Abschätzung von Nähe bzw. Überstimmungsgrad der Umgebungsmuster geliefert, so wird im dritten Verfahrensschritt 3 zwischen dem mobile Gerät MG über die Kopplungskomponente CDE, insbesondere über die Nähebestimmungseinheit PDE, zu dem Ausgabegerät AG eine dynamische Kopplung LC aufgebaut. Wird eine zu geringe Nähe festgestellt, dann wird keine Kopplung LC aufgebaut bzw. wird bei bestehender Kopplung LC eine zu geringe Nähe zwischen den Geräten MG, AG ermittelt, dann wird die Kopplung LC abgebaut. Der jeweilige Status der Kopplung zwischen einem mobilen Gerät MG und einem Ausgabegerät AG wird dabei in einer Kopplungsstatuseinheit CSR hinterlegt. Mit Hilfe der Kopplungsstatuseinheit CSR kann daher der aktuelle Status einer Kopplung LC (z.B. gekoppelt, entkoppelt, etc.) zwischen mobilen Geräten MG und Ausgabegeräten AG eines Kopplungsszenarios sowie eine Anzahl an beteiligten Geräten MG, AG bestimmt werden.

Die benutzerspezifischen Umgebungsmuster für den Vergleich durch die Mustererkennungseinheit PRE sind in der Mustererkennungsdatenbank CPR abgelegt. In der Mustererkennungsdatenbank CPR werden Situationsparameter von Umgebungsmuster von Kopplungsszenarien, Umgebungsmuster und gegebenenfalls auch Entscheidungsfindungen/-kriterien der Nähebestimmungseinheit PDE und/oder der Mustererkennungseinheit PRE bei Kopplungs- und/oder Entkopplungsprozessen benutzerspezifisch abgelegt. Diese Umgebungsmuster, Parameter, etc. werden einerseits von der Koppelstatuseinheit CSR zur Verfügung gestellt und können andererseits in bei einem Registrierungsvorgang, bei welchem zu koppelnde Ausgabegeräte AG von einem Benutzer registriert werden können, in der Mustererkennungsdatenbank CPR gespeichert.

Ein Zusammenspiel für eine Entscheidungsfindung zwischen Mustererkennungseinheit PRE und Mustererkennungsdatenbank läuft beispielsweise folgendermaßen ab. Von der Mustererkennungseinheit PRE werden für eine Kopplungsentscheidung Entscheidungsdaten - z.B. von der Nähebestimmungseinheit PDE - angefordert. Derartige Entscheidungsdaten können beispielsweise Geräuschdaten, optische Daten, etc. sein, welche mittels eines Sensors des mobilen Gerätes MG aufgenommen werden können. Um festzustellen, ob diese Parameter eines aktuellen Umgebungsmusters mit einem bekannten Umgebungsmuster eines bekannten Kopplungsszenarios des Benutzers weitgehend übereinstimmen, werden von der Mustererkennungsdatenbank CPR gespeicherte Parameter und/oder Umgebungsmuster früherer Kopplungsszenarien zur Verfügung gestellt - wie z.B. Geräusche von der Ausgabeeinheit, Kamerabilder wie z.B. Muster des Fußbodens, WLAN-Feldstärke, etc. Diese gespeicherten Parameter werden dann mit den aktuell festgestellten Parametern des aktuellen Umgebungsmusters von der Mustererkennungseinheit PRE auf Übereinstimmungen geprüft. Von der Mustererkennungseinheit PRE wird dann ein Übereinstimmungsgrad bzw. eine Wahrscheinlichkeit abgeschätzt, ob die vorliegende Kopplungssituation mit früheren Kopplungssituationen weitgehend übereinstimmt. Das Ergebnis - d.h. die Abschätzung des Übereinstimmungsgrads wird dann den anderen Einheiten der Kopplungskomponente CDE, insbesondere der Nähebestimmungseinheit PDE, zur Verfügung gestellt.

Für eine erstmalige Registrierung eines Ausgabegerätes AG eines Benutzers für eine dynamische Kopplung LC mit den mobilen Geräten MG dieses Benutzers ist in der Kopplungskomponente CDE eine Registrierungseinheit IPE vorgesehen. Über die Registrierungseinheit IPE wird eine anfängliche Paarbildung zwischen mobilen Geräten MG und Ausgabegeräten AG eines dynamischen Kopplungsszenarios durchgeführt. Der Registrierungseinheit IPE kommt z.B. besondere Relevanz zu, wenn ein neues Ausgabegerät AG, einen neue Anwendung, etc. vom Benutzer erworben wurde und in einem dynamischen Kopplungsszenario des Benutzers eingesetzt werden soll.

Die anfängliche Registrierung wird ebenfalls durch die Triggereinheit CIE angestoßen - z.B. durch spezielle Eingaben wie einem so genannten Initial Pairing-Command, einer Geräte-ID, Benutzer-ID, etc. durch den Benutzer - und über die Nähebestimmungseinheit PDE wird dann die Registrierungseinheit IPE aufgerufen. Von der Registrierungseinheit IPE werden für die Registrierung relativ viele Benutzereingaben gefordert. So kann z.B. durch Interaktion mit den gewünschten Ausgabegeräten AG und/oder mobilen Geräten MG innerhalb eines vorgegebenen Zeitfensters durch den Benutzer angegeben werden, welche Ausgabegeräte AG und/oder mobilen Geräte MG dem Kopplungsszenario angehören sollen. Von der Registrierungseinheit IPE werden dann die entsprechenden benutzerspezifischen Umgebungsmuster zu den Geräten MG, AG registriert und in der Mustererkennungsdatenbank CPR abgespeichert. Dazu kann die Registrierungseinheit IPE verschiedene Untereinheit aufweisen wie z.B. einen Initial Pairing-Initiator, eine Zeitfenster-Synchronisierung, einen Code-Generator, einen Code-Validator, Schnittstellen zu verschiedenen Geräten MG, AG, eine Kopplungsbestätigungseinheit, etc.

Weiterhin kann die Kopplungskomponente CDE noch eine Sicherheitseinheit YPRE umfassen. In der Sicherheitseinheit YPRE können Informationen über Jugendschutzparameter (z.B. Altersfreigabe der Dateninhalte, Inhalt nur für Erwachsene, etc.) gespeichert und den anderen Einheiten der Kopplungskomponente CDE zur Verfügung gestellt werden. Mit der Sicherheitseinheit YPRE können - insbesondere während des vierten Verfahrensschritts 4 - bei bestehender Kopplung LC bei Auswahl und/oder vor bzw. bei Anzeigen von insbesondere bei nicht jugendfreien Dateninhalten Überprüfungen der Kopplung LC durchgeführt werden, damit diese Dateninhalte nicht von z.B. Minderjährigen unbeabsichtigt konsumiert werden können. Dabei kann die Überprüfung der Kopplung LC beispielsweise über Erhöhung oder Erniedrigung eines Schwellwertes für den ersten Trigger T1 ausgelöst werden, sodass die Überprüfung der Kopplung LC auf Basis der Jugendfreigabe erfolgt - z.B. bei einem Freigabealter von 18 Jahren wird immer eine Überprüfung der Kopplung LC durchgeführt, bei einem niedrigeren Freigabealter ist der Schwellwert für die Überprüfung - je nach genutztem Schwellwert - entsprechend niedriger oder höher.

Weiterhin weist die Kopplungskomponenten CDE eine Eingabegerätprüfeinheit AIE auf. Mit der Eingabegerätprüfeinheit AIE werden ein Vorhandensein von alternativen Eingabegeräten (z.B. Fernbedienung, etc.) sowie Eingaben und Aktivitäten von einem gegebenenfalls vorhandenen alternativen Eingabegerät verfolgt und überwacht. Insbesondere wird von der Eingabegerätprüfeinheit AIE geprüft, inwiefern ein alternatives Eingabegerät bzw. Eingaben darüber die dynamische Kopplung zwischen dem jeweiligen mobilen Gerät MG und der Ausgabeeinheit AG beeinflussen. Dazu werden von der Eingabegerätprüfeinheit AIE mit den alternativen Eingabeeinheiten wie z.B. Fernbedienung, Infrarot-Empfängern, Home-Media-Gateways, etc. interagiert, ihre jeweiligen Status gehalten und Eingaben analysiert. Die Eingabegerätprüfeinheit AIE kann damit sehr einfach zusätzliche Eingaben z.B. über Fernbedienung oder vom Home-Media-Gateway bestimmen, durch welche eine dynamische Kopplung LC beispielsweise sofort aufzubauen oder abzubauen ist.

Zusätzlich kann die Kopplungskomponente CDE noch eine Autorisierungsschnittstelle AAI umfassen, über welche im vierten Verfahrensschritt 4 geprüft werden kann - z.B. durch Abfrage einer Rechtedatenbank ADB, ob ein Benutzer zum Bezug bestimmter Dateninhalte berechtigt ist (d.h. gegebenenfalls Gebühren für die Dateninhalte gezahlt wurden, etc.) oder ob ein Abspielen der Dateninhalte rechtlich erlaubt ist (d.h. der Anbieter die entsprechenden Rechte zum Verbreiten der Dateninhalte hat).

Durch das erfindungsgemäße Verfahren und System kann ein Benutzer damit auf einfache Weise seine mobilen Geräte MG für eine Steuerung der Ausgabe und Anzeige von in einem zellulären Kommunikationsnetz KN verfügbaren bzw. durch Anbieter OTT angeboten Dateninhalte auf einem von ihm gewünschten Ausgabegerät AG nutzen. Eine direkte Verbindung zwischen mobilem Gerät MG und Ausgabegeräte AG ist nicht notwendig. Durch das erfindungsgemäße Verfahren bzw. System wird mit Hilfe der Kopplungskomponenten CDE bei entsprechender Nähe zwischen den Geräten MG, AG automatisch und dynamisch einen Kopplung LC zwischen diesen Geräten MG, AG aufgebaut. Wird das mobile Gerät MG wird auch der Nähe des Ausgabegerätes AG entfernt, so wird dies von der Kopplungskomponente CDE aufgrund einer Änderung der aktuellen Umgebungsparameter festgestellt und bei einem entsprechenden Abschätzungsergebnis von Nähe und Übereinstimmungsgrad mit einem gespeicherten, benutzerspezifischen Umgebungsmuster (d.h. geringe Wahrscheinlichkeit der Übereinstimmung) die Kopplung LC automatisch wieder abgebaut.

## Patentansprüche

1. Verfahren zur dynamischen Kopplung (LC) von zumindest einem mobilen Gerät (MG) mit zumindest einem Ausgabegerät (AG), wobei mit dem zumindest einen mobilen Gerät (MG) eine Auswahl und Ausgabe von Dateninhalten gesteuert wird, und wobei die Dateninhalte über ein zelluläres Kommunikationsnetz (KN) zur Verfügung gestellt werden, wobei vom zumindest einen mobilen Gerät (MG) über das zelluläre Kommunikationsnetz (KN) eine Kopplungskomponente (CDE) angestoßen wird (1), dass dann auf Basis eines gespeicherten, benutzerspezifischen Umgebungsmusters von der Koppelungskomponente (CDE) das zumindest eine zu koppelnde Ausgabegerät (AG) bestimmt (2) und eine Kopplung (LC) mit dem zumindest einen mobilen Gerät dynamisch durchgeführt wird (3, 4), dass für ein Anstoßen der Kopplungskomponente (CDE) und für eine Bestimmung des zumindest einen zu koppelnden Ausgabegerätes (AG) von dem zumindest einen mobilen Gerät (MG) ein aktuelles Umgebungsmuster ermittelt wird (1), und dass auf Basis eines Vergleichs von Parametern des aktuellen Umgebungsmusters mit Parametern des gespeicherten, benutzerspezifischen Umgebungsmusters durch die Kopplungskomponente (CDE) von einer Nähebestimmungseinheit (PDE) der Kopplungskomponente (CDE) eine Nähe zwischen dem zumindest einem mobilen Gerät (MG) und dem zumindest einen Ausgabegerät (AG) abgeschätzt wird (2), wobei als Parameter des aktuellen Umgebungsmusters für die Näheabschätzung Feldstärken von drahtlosen Kommunikationsnetzen und/oder eine Senderidentifikation von Wireless LAN und/oder Bluetooth, und/oder ein hörbares und/oder nicht hörbares Audiosignal, und/oder optische Umgebungsparameter verwendet werden.

2. Verfahren nach Anspruch 1, wobei für eine Näheabschätzung von der Nähebestimmungseinheit (PDE) Methoden der so genannten Fuzzy-Logik oder Modelle der Wahrscheinlichkeitsrechnung verwendet werden.

3. Verfahren nach einem der Ansprüche 1 bis 2, wobei dann in einer weiteren, genaueren Näheabschätzung Parameter des aktuellen Umgebungsmusters von einer Mustervergleichseinheit (PRE) der Kopplungskomponente (CDE) mit dem gespeicherten, benutzerspezifischen Umgebungsmuster verglichen werden, und dass dabei ein Übereinstimmungsgrad der Parameter des aktuellen Umgebungsmusters mit dem gespeicherten, benutzerspezifischen Umgebungsmuster bestimmt wird (2).

4. Verfahren nach Anspruch 3, wobei für eine Bestimmung des Übereinstimmungsgrads von der Mustererkennungseinheit (PRE) Methoden der so genannten Fuzzy-Logik verwendet werden.

5. Verfahren nach einem der Ansprüche 1 bis 4, wobei zumindest eine zu koppelnde Ausgabegerät (AG) mit einem zugehörigen, benutzerspezifischen Umgebungsmuster mit Hilfe einer Registrierungseinheit (IPE) der Kopplungskomponente (CDE) registriert wird.

6. Verfahren nach einem der Ansprüche 1 bis 5, wobei zum zumindest einen zu koppelnden Ausgabegerät (AG) gehörende benutzerspezifische Umgebungsmuster in einer Mustererkennungsdatenbank (CPR) der Kopplungskomponente (CDE) abgespeichert wird.

7. Verfahren nach einem der Ansprüche 1 bis 6, wobei ein Status der Koppelung zwischen dem zumindest einen mobilen Gerät (MG) und dem zumindest einen zu koppelnden Ausgabegerät (AG) in einer Kopplungsstatuseinheit (CSR) der Kopplungskomponente (CDE) abgespeichert wird (2).

8. Verfahren nach einem der Ansprüche 1 bis 7, wobei bei speziellen Dateninhalten über eine Sicherheitseinheit (YPRE) der Kopplungskomponente (CDE) eine zusätzliche Überprüfung der Kopplung (LC) zwischen dem zumindest einen mobilen Gerät (MG) und dem zumindest einen Ausgabegerät (AG) angestoßen wird.

9. Verfahren nach einem der Ansprüche 1 bis 8, wobei von der Kopplungskomponente (CDE) mit einer Eingabegerätprüfeinheit (AIE) ein Vorhandensein eines zusätzlichen Eingabegerätes, insbesondere einer Fernbedienung, zum zumindest einen Ausgabegerät (AG) geprüft wird.

10. Verfahren nach einem der Ansprüche 1 bis 9, wobei von der Kopplungskomponente (CDE) über eine Autorisierungsschnittstelle (AAI) Berechtigungen für einen Bezug von Dateninhalten geprüft werden.

11. System zur Durchführung des Verfahrens nach einem der Ansprüche 1 bis 10, welches zumindest ein mobiles Gerät (MG), welches zur Steuerung einer Auswahl und Ausgabe von Dateninhalten vorgesehen ist, zumindest ein Ausgabegerät (AG) sowie ein zelluläres Kommunikationsnetzwerk (KN) zum Bereitstellen der Dateninhalte umfasst, wobei eine Kopplungskomponente (CDE) zur Bestimmung des zumindest einen zu koppelnden Ausgabegerätes (AG) derart angepasst ist, dass auf Basis eines gespeicherten, benutzerspezifischen Umgebungsmusters das zumindest eine zu koppelnde Ausgabegerät (AG) bestimmt wird und dynamisch eine Kopplung (LC) mit dem zumindest einen mobilen Gerät (MG) durchgeführt wird, und dass die Kopplungskomponente (CDE) eine Triggereinheit (CIE) zum Anstoßen für ein Herstellen der Kopplung (LC) und eine Nähebestimmungseinheit (PDE) zum Abschätzen einer Nähe zwischen mobilen Geräten (MG) und Ausgabegeräten (AG) sowie eine Mustererkennungseinheit (PRE) zum Vergleichen von Parametern des gespeicherten, benutzerspezifischen Umgebungsmusters mit Parametern des von dem zumindest einen mobilen Gerät (MG) aktuell ermittelten Umgebungsmusters ausweist, als Parameter des aktuellen Umgebungsmusters für die Näheabschätzung Feldstärken von drahtlosen Kommunikationsnetzen oder eine Senderidentifikation von Wireless LAN oder Bluetooth, ein hörbares oder nicht hörbares Audiosignal, optische Umgebungsparameter oder Positionsdaten des mobilen Geräts (MG) verwendet werden.

12. System nach Anspruch 11, wobei die Kopplungskomponente (CDE) eine Registrierungseinheit (IPE) zum Registrieren zu koppelnder Ausgabegeräte (AG) und eine Mustererkennungsdatenbank (CPR) zum Abspeichern benutzerspezifischer Umgebungsmuster umfasst.

13. System nach einem der Ansprüche 11 bis 12, wobei die Kopplungskomponente (CDE) eine Kopplungsstatuseinheit (CSR) zum Abspeichern eines Status der Koppelung (LC) aufweist.

14. System nach einem der Ansprüche 11 bis 13, wobei die Kopplungskomponente (CDE) weiterhin umfasst:
- eine Sicherheitseinheit (YPRE) zum Anstoßen einer zusätzlichen Überprüfung der Kopplung (LC) bei speziellen Dateninhalten,
- eine Eingabegerätprüfeinheit (AIE) zum Überprüfen eines Vorhandenseins zusätzlicher, zum jeweiligen Ausgabegerät (AG) gehörender Eingabegeräte,
- und eine Autorisierungsschnittstelle (AAI) zum Prüfen von Berechtigungen für einen Bezug von Dateninhalten.

15. System nach einem der Ansprüche 11 bis 14, wobei als mobiles Gerät (MG), welches zur Steuerung der Auswahl und Ausgabe von Dateninhalten einsetzbar ist, ein so genanntes Smartphone, ein so genannter Tablet-PC und ein Laptop vorgesehen sind.

16. System nach einem der Ansprüche 11 bis 15, wobei als Ausgabegerät (AG) für eine Anzeige der Dateninhalte, eine Bildschirmeinheit eines TV-Gerätes, eines so genannten Smartphones, eines so genannten Tablet-PCs oder eines Laptops verwendbar ist.

17. System nach einem der Ansprüche 11 bis 16, wobei als zelluläres Kommunikationsnetz (KN) das Internet vorgesehen ist.

## Claims

1. Method for dynamically coupling (LC) at least one mobile device (MG) to at least one output device (AG), wherein the at least one mobile device (MG) is used to control a selection and output of data contents, and wherein the data contents are provided via a cellular communication network (KN), wherein a coupling component (CDE) is initiated (1) by the at least one mobile device (MG) via the cellular communication network (KN), wherein the at least one output device (AG) to be coupled is then determined (2) by the coupling component (CDE) on the basis of a stored user-specific environment pattern and coupling (LC) to the at least one mobile device is dynamically carried out (3, 4), wherein a current environment pattern is determined (1) by the at least one mobile device (MG) for the purpose of initiating the coupling component (CDE) and for the purpose of determining the at least one output device (AG) to be coupled, and wherein a proximity between the at least one mobile device (MG) and the at least one output device (AG) is estimated (2) by a proximity determination unit (PDE) of the coupling component (CDE) on the basis of a comparison of parameters of the current environment pattern with parameters of the stored user-specific environment pattern by the coupling component (CDE), wherein field strengths of wireless communication networks and/or a transmitter identification of wireless LAN and/or Bluetooth and/or an audible and/or inaudible audio signal and/or optical environment parameters are used as parameters of the current environment pattern for estimating the proximity.

2. Method according to Claim 1, wherein so-called fuzzy logic methods or probability calculation models are used by the proximity determination unit (PDE) for a proximity estimation.

3. Method according to either of Claims 1 and 2, wherein, in a further, more accurate proximity estimation, parameters of the current environment pattern are then compared with the stored user-specific environment pattern by a pattern comparison unit (PRE) of the coupling component (CDE), and wherein a degree of correspondence between the parameters of the current environment pattern and the stored user-specific environment pattern is determined (2) in the process.

4. Method according to Claim 3, wherein so-called fuzzy logic methods are used by the pattern recognition unit (PRE) to determine the degree of correspondence.

5. Method according to one of Claims 1 to 4, wherein at least one output device (AG) to be coupled is registered with an associated user-specific environment pattern with the aid of a registration unit (IPE) of the coupling component (CDE).

6. Method according to one of Claims 1 to 5, wherein user-specific environment patterns belonging to the at least one output device (AG) to be coupled are stored in a pattern recognition database (CPR) of the coupling component (CDE).

7. Method according to one of Claims 1 to 6, wherein a status of the coupling between the at least one mobile device (MG) and the at least one output device (AG) to be coupled is stored (2) in a coupling status unit (CSR) of the coupling component (CDE).

8. Method according to one of Claims 1 to 7, wherein, in the case of specific data contents, an additional check of the coupling (LC) between the at least one mobile device (MG) and the at least one output device (AG) is initiated via a security unit (YPRE) of the coupling component (CDE).

9. Method according to one of Claims 1 to 8, wherein a presence of an additional input device, in particular a remote control, for the at least one output device (AG) is checked by the coupling component (CDE) using an input device checking unit (AIE).

10. Method according to one of Claims 1 to 9, wherein authorizations for procuring data contents are checked by the coupling component (CDE) via an authorization interface (AAI).

11. System for carrying out the method according to one of Claims 1 to 10, which comprises at least one mobile device (MG) provided for the purpose of controlling a selection and output of data contents, at least one output device (AG) and a cellular communication network (KN) for providing the data contents, wherein a coupling component (CDE) for determining the at least one output device (AG) to be coupled is adapted in such a manner that the at least one output device (AG) to be coupled is determined on the basis of a stored user-specific environment pattern and coupling (LC) to the at least one mobile device (MG) is dynamically carried out, and wherein the coupling component (CDE) has a trigger unit (CIE) for initiating establishment of the coupling (LC) and a proximity determination unit (PDE) for estimating a proximity between mobile devices (MG) and output devices (AG) and a pattern recognition unit (PRE) for comparing parameters of the stored user-specific environment pattern with parameters of the environment pattern currently determined by the at least one mobile device (MG), and field strengths of wireless communication networks or a transmitter identification of wireless LAN or Bluetooth, an audible or inaudible audio signal, optical environment parameters or position data relating to the mobile device (MG) are used as parameters of the current environment pattern for estimating the proximity.

12. System according to Claim 11, wherein the coupling component (CDE) comprises a registration unit (IPE) for registering output devices (AG) to be coupled and a pattern recognition database (CPR) for storing user-specific environment patterns.

13. System according to either of Claims 11 and 12, wherein the coupling component (CDE) has a coupling status unit (CSR) for storing a status of the coupling (LC).

14. System according to one of Claims 11 to 13, wherein the coupling component (CDE) also comprises:
- a security unit (YPRE) for initiating an additional check of the coupling (LC) in the case of specific data contents,
- an input device checking unit (AIE) for checking a presence of additional input devices belonging to the respective output device (AG),
- and an authorization interface (AAI) for checking authorizations for procuring data contents.

15. System according to one of Claims 11 to 14, wherein a so-called smartphone, a so-called tablet PC and a laptop are provided as a mobile device (MG) which can be used to control the selection and output of data contents.

16. System according to one of Claims 11 to 15, wherein a screen unit of a TV device, of a so-called smartphone, of a so-called tablet PC or of a laptop can be used as an output device (AG) for displaying the data contents.

17. System according to one of Claims 11 to 16, wherein the Internet is provided as the cellular communication network (KN).

## Revendications

1. Procédé de couplage dynamique (LC) d'au moins un appareil mobile (MG) à au moins un appareil de sortie (AG), dans lequel une sélection et une sortie de contenus de données sont commandées par l'au moins un appareil mobile (MG), et dans lequel les contenus de données sont mis à disposition par l'intermédiaire d'un réseau de communication cellulaire (KN), dans lequel un composant de couplage (CDE) est activé (1) par l'au moins un dispositif mobile (MG) par l'intermédiaire du réseau de communication cellulaire (KN),
en ce que l'au moins un dispositif de sortie (AG) à coupler est ensuite déterminé (2) par le composant de couplage (CDE) sur la base d'un modèle d'environnement mémorisé et spécifique à l'utilisateur, et un couplage (LC) avec l'au moins un appareil mobile est effectué dynamiquement (3, 4), en ce qu'un modèle d'environnement actuel est déterminé (1) par l'au moins un appareil mobile (MG) pour activer le composant de couplage (CDE) et pour déterminer l'au moins un appareil de sortie (AG) à coupler, et en ce qu'une proximité entre l'au moins un appareil mobile (MG) et l'au moins un appareil de sortie (AG) est estimée (2) par le composant de couplage (CDE), au moyen d'une unité de détermination de proximité (PDE) du composant de couplage (CDE), sur la base d'une comparaison de paramètres du modèle d'environnement actuel avec des paramètres du modèle d'environnement enregistré et spécifique à l'utilisateur,
dans lequel des intensités de champ de réseaux de communication sans fil et/ou une identification d'émetteur de réseau local sans fil et/ou Bluetooth, et/ou un signal audio audible et/ou inaudible, et/ou des paramètres d'environnement optiques sont utilisés pour l'estimation de proximité en tant que paramètres du modèle d'environnement actuel.

2. Procédé selon la revendication 1, dans lequel des méthodes de la logique dite floue ou des modèles de calcul de probabilité sont utilisés par l'unité de détermination de proximité (PDE) pour une estimation de proximité.

3. Procédé selon l'une des revendications 1 à 2, dans lequel, dans une autre estimation de proximité plus précise, des paramètres du modèle d'environnement actuel sont comparés par une unité de comparaison de modèle (PRE) du composant de couplage (CDE) au modèle d'environnement enregistré et spécifique à l'utilisateur, et en ce qu'un degré de concordance des paramètres du modèle d'environnement actuel est ainsi déterminée avec le modèle d'environnement enregistré et spécifique à l'utilisateur (2).

4. Procédé selon la revendication 3, dans lequel des méthodes de la logique dite floue sont utilisées par l'unité de reconnaissance de formes (PRE) pour déterminer le degré de concordance.

5. Procédé selon l'une des revendications 1 à 4, dans lequel l'au moins un appareil de sortie (AG) à coupler est enregistré à l'aide d'une unité d'enregistrement (IPE) de l'élément de couplage (CDE) avec un modèle d'environnement associé et spécifique à l'utilisateur.

6. Procédé selon l'une des revendications 1 à 5, dans lequel le modèle d'environnement spécifique à l'utilisateur appartenant à l'au moins un appareil de sortie (AG) à coupler est enregistré dans une base de données de reconnaissance de formes (CPR) du composant de couplage (CDE).

7. Procédé selon l'une des revendications 1 à 6, dans lequel un état du couplage entre l'au moins un appareil mobile (MG) et l'au moins un appareil de sortie (AG) à coupler est enregistré (2) dans une unité d'état de couplage (CSR) du composant de couplage (CDE).

8. Procédé selon l'une des revendications 1 à 7, dans lequel une vérification supplémentaire du couplage (LC) entre l'au moins un appareil mobile (MG) et l'au moins un appareil de sortie (AG) est activée par l'intermédiaire d'une unité de sécurité (YPRE) du composant de couplage (CDE) dans le cas de contenus de données spéciaux.

9. Procédé selon l'une des revendications 1 à 8, dans lequel une présence d'un appareil d'entrée supplémentaire, en particulier d'une commande à distance, est vérifiée pour au moins un appareil de sortie (AG) par le composant de couplage (CDE) au moyen d'une unité de vérification d'appareil d'entrée (AIE).

10. Procédé selon l'une des revendications 1 à 9, dans lequel des autorisations pour l'obtention de contenus de données sont vérifiées par le composant de couplage (CDE) par l'intermédiaire d'une interface d'autorisation (AAI).

11. Système destiné à mettre en oeuvre le procédé selon l'une des revendications 1 à 10, comprenant au moins un appareil mobile (MG) qui est prévu pour commander une sélection et une sortie de contenus de données, au moins un appareil de sortie (AG) et un réseau de communication cellulaire (KN) pour fournir les contenus de données, dans lequel un composant de couplage (CDE) destiné à déterminer l'au moins un appareil de sortie (AG) à coupler est conçu de manière à ce que l'au moins un appareil de sortie (AG) à coupler soit déterminé sur la base d'un modèle d'environnement enregistré et spécifique à l'utilisateur et à ce qu'un couplage (LC) à l'au moins un appareil mobile (MG) soit effectué dynamiquement, et
en ce que le composant de couplage (CDE) comporte une unité d'activation (CIE) pour activer le couplage (LC) et une unité de détermination de proximité (PDE) pour estimer une proximité entre des appareils mobiles (MG) et des appareils de sortie (AG) et une unité de reconnaissance de forme (PRE) pour comparer des paramètres du modèle d'environnement enregistré et spécifique à l'utilisateur à des paramètres du modèle d'environnement actuels déterminés par l'au moins un appareil mobile (MG), des intensités de champ de réseaux de communication sans fil ou une identification d'émetteur de réseau local sans fil ou Bluetooth, un signal audio audible ou inaudible, des paramètres d'environnement optiques ou des données de position de l'appareil mobile (MG), sont utilisés en tant que paramètres d'environnement actuels pour l'estimation de proximité.

12. Composant de couplage (CDE) comprenant une unité d'enregistrement (IPE) pour l'enregistrement d'appareils de sortie (AG) à coupler et une base de données de reconnaissance de formes (CPR) pour enregistrer des modèles d'environnement spécifiques à l'utilisateur.

13. Système selon l'une des revendications 11 à 12, dans lequel le composant de couplage (CDE) comprend une unité d'état de couplage (CSR) pour enregistrer un état du couplage (LC).

14. Système selon l'une des revendications 11 à 13, dans lequel le composant de couplage (CDE) comprend en outre :
- une unité de sécurité (YPRE) pour activer une vérification supplémentaire du couplage (LC) dans le cas de contenus de données spéciaux,
- une unité de vérification d'appareil d'entrée (AIE) pour vérifier la présence d'appareils d'entrée supplémentaires appartenant à l'appareil de sortie respectif (AG),
- et une interface d'autorisation (AAI) pour vérifier des autorisations pour l'obtention de contenus de données.

15. Système selon l'une des revendications 11 à 14, dans lequel un dispositif dit téléphone intelligent, un dispositif dit tablette PC et un dispositif dit ordinateur portable sont prévus en tant qu'appareil mobile (MG) qui peut être utilisé pour commander la sélection et la sortie de contenus de données.

16. Système selon l'une des revendications 11 à 15, dans lequel une unité à écran d'un téléviseur, d'un dispositif dit téléphone intelligent, d'un dispositif dit tablette PC ou d'un dispositif dit ordinateur portable peut être utilisée en tant qu'appareil de sortie (AG) pour un affichage des contenus de données.

17. Système selon l'une des revendications 11 à 16, dans lequel il est en particulier prévu en tant que réseau de communication cellulaire (KN) l'Internet.
